# EUROPEAN PATENT APPLICATION

(11) **EP 4 672 857 A1**
(43) Date of publication of application: **31.12.2025**
(21) Application number: 23923245.7
(22) Date of filing: 20.02.2023
(51) Int. Cl.: H04W 76/28

(54) **SIDELINK COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: RGTH
(86) International application number: PCT/CN2023/077131
(87) International publication number: WO 2024/174059

(57) **Abstract**

Provided are a sidelink communication method, a terminal device, and a network device. The method comprises: a first terminal device determines a first timer for sidelink communication, a first duration of the first timer being associated with a transmission delay of a non-terrestrial network (NTN) where the first terminal device is located. The first duration is associated with the transmission delay of the NTN, so that the matching degree between a duration of the first timer and the transmission delay of the NTN can be improved, or the matching degree between a duration of a timer in an SL-DRX mechanism and the transmission delay of the NTN can be improved, thereby improving the success rate of communication between a first terminal device and a network device under the NTN.

## Description

### TECHNICAL FIELD

This application relates to the field of communications technologies, and more specifically, to a method for sidelink communication, a terminal device, and a network device.

### BACKGROUND

It may be learned that, in non-terrestrial networks (non-terrestrial networks, NTN), a transmission delay between a network device and a terminal device is relatively large. Currently, to consider an impact of a larger transmission delay in the NTN on a Uu DRX mechanism, in some communications protocols (for example, R17), a discontinuous reception (discontinuous reception, DRX) mechanism is enhanced. However, in some scenarios, a terminal device that performs sidelink (sidelink, SL) communication in the NTN also needs to communicate with the network device. In the NTN, there is no available solution on how to enhance an SL-DRX mechanism supported by the terminal device, which may cause a mismatch between the SL-DRX mechanism and a relatively large transmission delay in the NTN, thus causing that communication between a network device and the terminal device that supports the SL-DRX mechanism fails.

### SUMMARY

This application provides a sidelink communication method, a terminal device, and a network device. The following describes the aspects related to this application.

According to a first aspect, a method for sidelink communication is provided, and the method includes: determining, by a first terminal device, a first timer used for sidelink communication, where first duration of the first timer is associated with a transmission delay in a non-terrestrial network NTN in which the first terminal device is located.

In embodiments of this application, the first terminal device may determine first duration of the first timer used for sidelink communication. The first duration is associated with the transmission delay in the NTN, which helps improve a matching degree between duration of the first timer and the transmission delay in the NTN, or helps improve a matching degree between duration of a timer in an SL-DRX mechanism and the transmission delay in the NTN, thereby improving a success rate of communication between the first terminal device and a network device in the NTN.

According to a second aspect, a method for sidelink communication is provided, and the method includes: determining, by a second terminal device, a second timer used for sidelink communication, where first duration of the second timer is associated with a transmission delay in a non-terrestrial network NTN.

In embodiments of this application, the second terminal device may determine first duration of the second timer used for sidelink communication. The first duration is associated with the transmission delay in the NTN, which helps improve a matching degree between duration of the second timer and the transmission delay in the NTN, or helps improve a matching degree between duration of a timer in an SL-DRX mechanism and the transmission delay in the NTN, thereby improving a success rate of sidelink communication of the second terminal device in the NTN.

According to a third aspect, a method for sidelink communication is provided, and the method includes: transmitting, by a first terminal device, first indication information to a second terminal device, where the first indication information is used for indicating a transmission delay in an NTN, and the transmission delay in the NTN is associated with first duration of a second timer used by the second terminal device for sidelink communication.

According to a fourth aspect, a method for sidelink communication is provided, and the method includes: receiving, by a second network device, second indication information transmitted by a second terminal device, where the second indication information is used for indicating a transmission delay of an NTN corresponding to a first terminal device that performs sidelink communication with the second terminal device.

According to a fifth aspect, a terminal device is provided, and the terminal device is a first terminal device and includes: a processing unit, configured to determine a first timer used for sidelink communication, where first duration of the first timer is associated with a transmission delay in a non-terrestrial network NTN in which the first terminal device is located.

According to a sixth aspect, a terminal device is provided, and the terminal device is a second terminal device and includes: a processing unit, configured to determine a second timer used for sidelink communication, where first duration of the second timer is associated with a transmission delay in a non-terrestrial network NTN.

According to a seventh aspect, a first terminal device is provided, and the first terminal device includes: a transmitting unit, configured to transmit first indication information to a second terminal device, where the first indication information is used for indicating a transmission delay in an NTN, and the transmission delay in the NTN is associated with first duration of a second timer used by the second terminal device for sidelink communication.

According to an eighth aspect, a network device is provided, and the network device is a second network device and includes: a receiving unit, configured to receive second indication information transmitted by a second terminal device, where the second indication information is used for indicating a transmission delay of an NTN corresponding to a first terminal device that performs sidelink communication with the second terminal device.

According to a ninth aspect, a terminal device is provided, and the terminal device includes: a processor, a memory, and a communications interface. The memory is configured to store one or more computer programs, and the processor is configured to invoke the computer program in the memory to cause the terminal device to execute some or all of the steps in the method according to the foregoing aspects.

According to a tenth aspect, a network device is provided, and the network device includes a processor, a memory, and a transceiver, where the memory is configured to store one or more computer programs; and the processor is configured to invoke the computer program in the memory, to cause the network device to execute some or all of the steps in a method according to the foregoing aspects.

According to an eleventh aspect, an embodiment of this application provides a communications system, and the system includes the terminal device and/or the network device described above. In another possible design, the system may further include another device that interacts with the terminal device or the network device in the solutions provided in embodiments of this application.

According to a twelfth aspect, an embodiment of this application provides a computer-readable storage medium. The computer-readable storage medium stores a computer program, and the computer program causes a communications device (for example, a terminal device or a network device) to execute some or all of the steps in the method according to the foregoing aspects.

According to a thirteenth aspect, an embodiment of this application provides a computer program product. The computer program product includes a non-transitory computer-readable storage medium that stores a computer program. The computer program is operable to cause a communications device (for example, a terminal device or a network device) to execute some or all of the steps in the method according to the foregoing aspects. In some implementations, the computer program product may be a software installation package.

According to a fourteenth aspect, an embodiment of this application provides a chip. The chip includes a memory and a processor, and the processor may invoke and run a computer program in the memory, to implement some or all of the steps in the methods according to the foregoing aspects.

### BRIEF DESCRIPTION OF DRAWINGS

FIG. 1A to FIG. 1C are system architectural diagrams of a communications system to which embodiments of this application are applicable.
FIG. 2 is a schematic diagram of a satellite network architecture to which embodiments of this application are applicable.
FIG. 3 is a schematic diagram of another satellite network architecture to which embodiments of this application are applicable.
FIG. 4 is a schematic diagram of another satellite network architecture to which embodiments of this application are applicable.
FIG. 5 is a schematic diagram of a DRX mechanism to which embodiments of this application are applicable.
FIG. 6 is a schematic diagram of an SL-DRX mechanism to which embodiments of this application are applicable.
FIG. 7 is a schematic flowchart of a method for sidelink communication according to an embodiment of this application.
FIG. 8 is a schematic diagram of a method for using a first timer according to an embodiment of this application.
FIG. 9 is a schematic flowchart of a method for sidelink communication according to an embodiment of this application.
FIG. 10 is a schematic diagram of a method for using a second timer according to an embodiment of this application.
FIG. 11 is a schematic flowchart of a transmission method of first indication information according to an embodiment of this application.
FIG. 12 is a schematic diagram of a terminal device according to an embodiment of this application.
FIG. 13 is a schematic diagram of a terminal device according to another embodiment of this application.
FIG. 14 is a schematic diagram of a terminal device according to another embodiment of this application.
FIG. 15 is a schematic diagram of a network device according to an embodiment of this application.
FIG. 16 is a schematic structural diagram of a communications apparatus according to an embodiment of this application.

### DESCRIPTION OF EMBODIMENTS

Technical solutions in this application are described below with reference to the accompanying drawings.

### Communications system architecture

The technical solutions in embodiments of this application may be applied to various communications systems, for example, a global system for mobile communications (global system of mobile communication, GSM), a code-division multiple access (code division multiple access, CDMA) system, a wideband code-division multiple access (wideband code division multiple access, WCDMA) system, general packet radio service (general packet radio service, GPRS), a long-term evolution (long term evolution, LTE) system, an advanced long-term evolution (advanced long term evolution, LTE-A) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (non-terrestrial network, NTN) system, a universal mobile telecommunications system (universal mobile telecommunication system, UMTS), a wireless local area network (wireless local area networks, WLAN), wireless fidelity (wireless fidelity, WiFi), a fifth-generation (5th-generation, 5G) system, or another communications system, for example, a future communications system such as a sixth-generation mobile communications system or a satellite communications system.

Generally, a quantity of connections supported by a conventional communications system is limited, and is also easy to implement. However, with development of communication technologies, a mobile communications system not only supports conventional communication, but also supports, for example, device-to-device (device to device, D2D) communication, machine-to-machine (machine to machine, M2M) communication, machine type communication (machine type communication, MTC), vehicle-to-vehicle (vehicle to vehicle, V2V) communication, or vehicle to everything (vehicle to everything, V2X) communication. Embodiments of this application may also be applied to these communications systems.

The communications system in embodiments of this application may be applied to a carrier aggregation (carrier aggregation, CA) scenario, a dual connectivity (dual connectivity, DC) scenario, or a standalone (standalone, SA) networking scenario.

The communications system in embodiments of this application may be applied to an unlicensed spectrum, and the unlicensed spectrum may also be considered as a shared spectrum. Alternatively, the communications system in embodiments of this application may be applied to a licensed spectrum, and the licensed spectrum may also be considered as a dedicated spectrum.

Embodiments of this application may be applied to an NTN system, or may be applied to a terrestrial communication network (terrestrial networks, TN) system. By way of example and without limitation, the NTN system includes an NR-based NTN system and an IoT-based NTN system.

Embodiments of this application are described with reference to a network device and a terminal device. The terminal device may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, a user apparatus, or the like.

In embodiments of this application, the terminal device may be a station (STATION, ST) in a WLAN, may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, a vehicle-mounted device, a wearable device, a terminal device in a next-generation communications system such as an NR network, or a terminal device in a future evolved public land mobile network (public land mobile network, PLMN), or the like.

The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may be configured to function as a base station. For example, the terminal device may function as a scheduling entity, which provides a sidelink signal between terminal devices in V2X, D2D, or the like. For example, a cellular phone and a vehicle communicate with each other through a sidelink signal. A cellular phone and a smart home device communicate with each other, without relaying a communication signal through a base station.

In embodiments of this application, the terminal device may be deployed on land, including being indoors or outdoors, may be handheld, wearable, or vehicle-mounted. The terminal device may be deployed on water (for example, on a ship), or may be deployed in the air (for example, on an airplane, an air balloon, or a satellite).

In embodiments of this application, the terminal device may be a mobile phone (mobile phone), a pad (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in smart grid (smart grid), a wireless terminal device in transportation safety (transportation safety), a wireless terminal device in smart city (smart city), or a wireless terminal device in smart home (smart home), or the like. The terminal device involved in embodiments of this application may also be referred to as a terminal, a user equipment (user equipment, UE), an access terminal device, a vehicle-mounted terminal, an industrial control terminal, a UE unit, a UE station, a mobile site, a mobile station, a remote station, a remote terminal device, a mobile device, a UE terminal device, a wireless communications device, a UE agent, a UE apparatus, or the like. The terminal device may also be fixed or mobile.

By way of example rather than limitation, in embodiments of this application, the terminal device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a full-featured and large-sized device that can provide full or partial functions without relying on a smart phone, for example, a smart watch or smart glasses, and devices that focus on only a specific type of application function and need to cooperate with another device such as a smart phone for use, for example, various smart bracelets and smart jewelries for physical sign monitoring.

The network device in embodiments of this application may be a device for communicating with the terminal device. The network device may also be referred to as an access network device or a wireless access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a Node B (NodeB), an evolved NodeB (evolved NodeB, eNB), a next-generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home eNodeB, a network controller, an access node, a radio node, an access point (access point, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. A scenario in which the network device and the terminal device are located is not limited in embodiments of this application.

By way of example rather than limitation, in embodiments of this application, the network device may have a mobility characteristic. For example, the network device may be a mobile device. In some embodiments of this application, the network device may be a satellite, or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. In some embodiments of this application, the network device may alternatively be a base station located on land, water, or the like.

In embodiments of this application, the network device may provide a service for a cell, and the terminal device communicates with the network device by using a transmission resource (for example, a frequency domain resource or a spectrum resource) used by the cell. The cell may be a cell corresponding to the network device (for example, a base station). The cell may belong to a macro base station or belong to a base station corresponding to a small cell (small cell). The small cell herein may include: a metro cell (metro cell), a micro cell (micro cell), a pico cell (pico cell), a femto cell (femto cell), or the like. These small cells feature small coverage and low transmit power, and are suitable for providing a high-speed data transmission service.

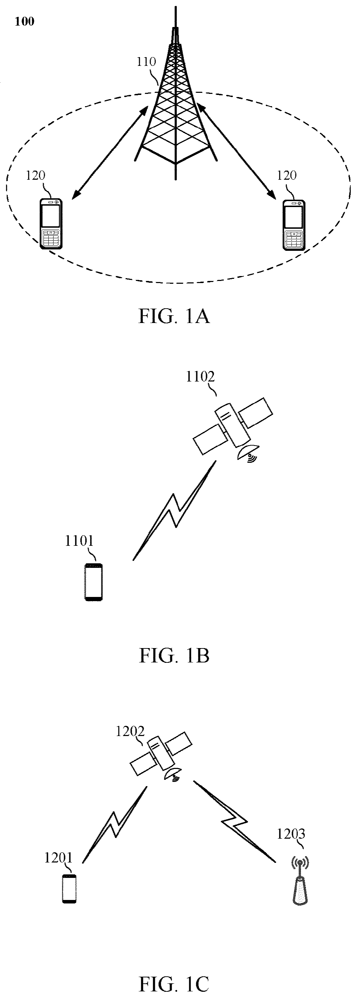

Exemplarily, FIG. 1A is a schematic diagram of an architecture of a communications system according to an embodiment of this application. As shown in FIG. 1A, a communications system 100 may include a network device 110, and the network device 110 may be a device that communicates with a terminal device 120 (or referred to as a communications terminal or a terminal). The network device 110 may provide communication coverage for a specific geographic area, and may communicate with a terminal device located within the coverage.

FIG. 1A shows an example in which there are one network device and two terminal devices. In some embodiments of this application, the communications system 100 may include a plurality of network devices and another number of terminal devices may be included within coverage of each network device, which is not limited in embodiments of this application.

Exemplarily, FIG. 1B is a schematic diagram of an architecture of another communications system according to an embodiment of this application. Referring to FIG. 1B, a terminal device 1101 and a satellite 1102 are included, and wireless communication may be performed between the terminal device 1101 and the satellite 1102. A network formed between the terminal device 1101 and the satellite 1102 may also be referred to as an NTN. In the architecture of the communications system shown in FIG. 1B, the satellite 1102 may have a function of a base station, and direct communication may be performed between the terminal device 1101 and the satellite 1102. In the system architecture, the satellite 1102 may be referred to as a network device. In some embodiments of this application, the communications system may include a plurality of network devices 1102, and another quantity of terminal devices may be included within a coverage range of each network device 1102, which is not limited in embodiments of this application.

Exemplarily, FIG. 1C is a schematic diagram of an architecture of another communications system according to an embodiment of this application. Referring to FIG. 1C, a terminal device 1201, a satellite 1202, and a base station 1203 are included, wireless communication may be performed between the terminal device 1201 and the satellite 1202, and communication may be performed between the satellite 1202 and the base station 1203. A network formed between the terminal device 1201, the satellite 1202, and the base station 1203 may also be referred to as an NTN. In the architecture of the communications system shown in FIG. 1C, the satellite 1202 may not have a function of a base station, and communication between the terminal device 1201 and the base station 1203 needs to be relayed by using the satellite 1202. In the architecture of the system, the base station 1203 may be referred to as a network device. In some embodiments of this application, the communications system may include a plurality of network devices 1203, and another quantity of terminal devices may be included within a coverage range of each network device 1203, which is not limited in embodiments of this application.

It should be noted that FIG. 1A to FIG. 1C are merely examples of systems to which this application is applicable. Certainly, the methods shown in embodiments of this application may also be applied to another system, such as a 5G communications system or an LTE communications system. This is not specifically limited in embodiments of this application.

In some embodiments of this application, the wireless communications systems shown in FIG. 1A to FIG. 1C may further include another network entity such as a mobility management entity (mobility management entity, MME) or an access and mobility management function (access and mobility management function, AMF), which is not limited in embodiments of this application.

It should be understood that in embodiments of this application, a device having a communication function in a network or a system may be referred to as a communications device. The communications system 100 shown in FIG. 1A is used as an example. The communications device may include the network device 110 and the terminal device 120 that have a communication function. The network device 110 and the terminal device 120 may be specific devices described above, and details are not described herein again. The communications device this application further include another device in the communications system 100, for example, another network entity such as a network controller or a mobility management entity, which is not limited in embodiments of this application.

It should be understood that, in embodiments of this application, "indication" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

"Configured" in embodiments of this application may include being configured by using at least one of system information, radio resource control (radio resource control, RRC) signalling, or a medium access control control element (media access control control element, MAC CE).

In some embodiments of this application, "predefined" or "preset" may be implemented in a manner in which corresponding code, a table, or other related information used for indication is pre-stored in a device (for example, including a terminal device and a network device). A specific implementation is not limited in this application. For example, being predefined may refer to being defined in a protocol.

In some embodiments of this application, the "protocol" may refer to a standard protocol in the communication field, which may include, for example, an LTE protocol, an NR protocol, and a related protocol applied to a future communications system. This is not limited in this application.

For ease of understanding, some related technical knowledge related to embodiments of this application is first introduced. The following related technologies, as optional solutions, may be randomly combined with the technical solutions of embodiments of this application, all of which fall within the protection scope of embodiments of this application. Embodiments of this application include at least part of the following content.

### NTN

Currently, the 3rd generation partnership project (3rd generation partnership project, 3GPP) is studying NTN technologies. An NTN generally provides a terrestrial user with a communication service through satellite communication. The satellite communication has many unique advantages over terrestrial communication networks (such as a terrestrial cellular communication).

First, the satellite communication is not limited by a geographic location of a user. For example, a general terrestrial communication network cannot cover an area such as an ocean, a mountain, or a desert in which a network device cannot be set up. Alternatively, the terrestrial communications network does not cover some areas that are sparsely populated. However, for the satellite communication, since one satellite may cover a relatively large terrestrial area, and the satellite may orbit the earth, theoretically, every corner of the earth may be covered by a satellite communication network.

Second, satellite communication has great social value. The satellite communication may cover remote mountainous areas, impoverished countries or regions at relatively low costs, thereby enabling people in these regions to enjoy advanced voice communication and mobile internet technologies. From this point of view, the satellite communication is conducive to narrowing a digital divide between these regions and developed regions and promoting development of these regions.

Third, the satellite communication has an advantage of long distance, and an increase in a communication distance does not significantly increase communication costs.

Finally, the satellite communication has high stability, and is not affected by natural disasters.

Communications satellites are divided into a low earth orbit (low earth orbit, LEO) satellite, a medium earth orbit (medium earth orbit, MEO) satellite, a geostationary earth orbit (geostationary earth orbit, GEO) satellite, a high elliptical orbit (high elliptical orbit, HEO) satellite, and the like according to different orbital altitudes. At this stage, the main study is on the LEO satellite and the GEO satellite.

An altitude of the LEO satellite generally ranges from 500 km to 1500 km. Correspondingly, an orbital period of the LEO satellite is about 1.5 hours to 2 hours. For the LEO satellite, a signal propagation delay of single-hop communication between users is generally less than 20ms. A maximum satellite visible time of the LEO satellite is about 20 minutes. The LEO satellite has advantages of a short signal propagation distance, a small link loss, and a low transmit power requirement for a terminal device of a user.

An orbital altitude of the GEO satellite is 35786 km. A period for the GEO satellite to rotate around the earth is 24 hours. For the GEO satellite, a signal propagation delay of single-hop communication between users is generally about 250ms.

To ensure satellite coverage and improve system capacity of an entire satellite communications system, the satellite generally generate a plurality of beams to cover a terrestrial area. Therefore, one satellite may generate dozens or even hundreds of beams to cover the terrestrial area. One beam of a satellite may cover a terrestrial area with a diameter of approximately tens to hundreds of kilometers.

Currently, an NTN system includes an NR-NTN system and an internet of things (internet of things, IoT)-NTN system.

### Satellite network architecture

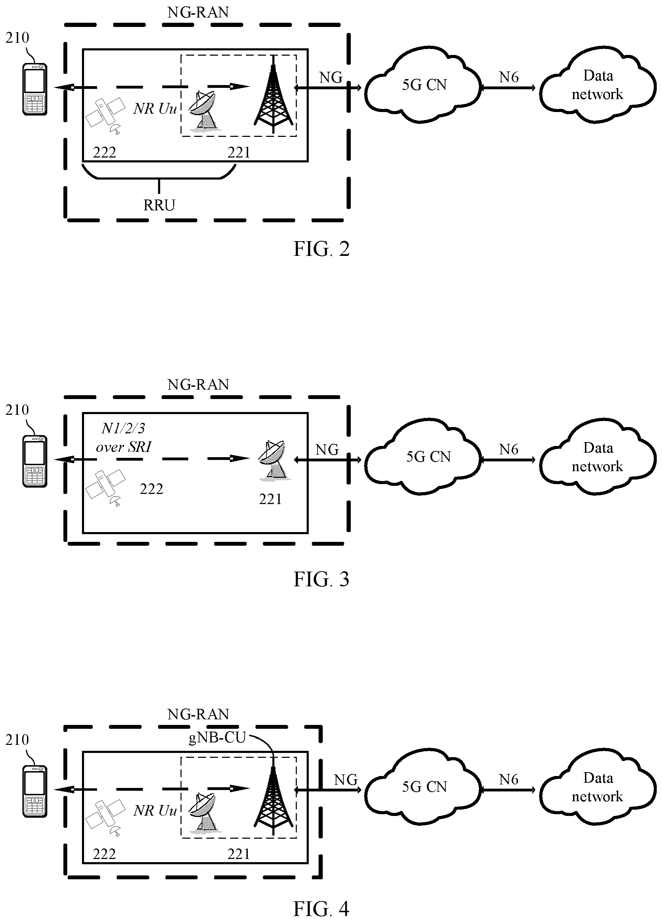

Currently, 3GPP considers two types of satellites: one is a transparent payload (transparent payload) satellite, and the other is a regenerative payload (regenerative payload) satellite. With reference to FIG. 2 to FIG. 4, the following separately describes a network architecture including a transparent payload satellite and a network architecture including a regenerative payload satellite.

In the satellite network architecture shown in FIG. 2 to FIG. 4, the satellite network architecture may include a terminal device 210, a satellite node 222, and a terrestrial receiving station 221 ("terrestrial station" for short). There is wireless communication between the terminal device 210 and the satellite node 222, and the terminal device 210 may transmit data to the satellite node 222 over a link between the terminal device 210 and the satellite node 222. For example, the terminal device 210 may transmit data to the satellite node 222 over a service link (service link). Accordingly, after receiving the data, the satellite node 222 may transmit the data to the terrestrial receiving station 221 over a link between the satellite node 222 and the terrestrial receiving station 221. For example, the satellite node 222 may transmit the data to the terrestrial receiving station 221 over a radio link (for example, a feeder link (feeder link)). Accordingly, after receiving the data from the satellite node 222, the terrestrial receiving station 221 transmits the data to a core network (data network), and further processes the data by using the core network, for example, performs data interaction with another terminal. It may be understood that the service link herein refers to the link between the terminal device 210 and the satellite node 222, and the feeder link refers to the link between the satellite node 222 and the terrestrial receiving station 221. In another possible embodiment, the link between the terminal device and the satellite node and/or the link between the satellite node and the terrestrial receiving station may also be represented by another term, which is not limited in this application.

The satellite node 222 may be classified into three types. A first type of satellite node is used only for forwarding, that is, having only a transparent payload function. In some implementations, such a satellite node may provide only one or more of a radio frequency filtering function, a frequency conversion function, or a power amplification function. For such a satellite node, a signal received from a terminal device may be amplified and then transmitted to the terrestrial receiving station. No processing is performed on the signal of the terminal device at the satellite node, as shown in FIG. 2. The terminal device may communicate with the satellite node by using an NR-Uu interface, the satellite node may communicate with the terrestrial receiving station (for example, may include an NTN remote radio unit (remote radio unit, RRU) and a gNB) by using an NR-Uu interface, the terrestrial receiving station may communicate with a 5G core network (5G CN) by using an N1 interface, an N2 interface, or an N3 interface, and the 5G CN may communicate with a data network by using an N6 interface.

A second type of satellite node has a complete processing function of a base station. For a terrestrial terminal device, the satellite node is a base station, and communication between the satellite node and the terminal device is basically consistent with normal 5G communication, as shown in FIG. 3. In some implementations, such a satellite node may further provide one or more of the following functions: a demodulation function, a decoding function, a routing function, a conversion function, an encoding function, or a modulation function. The terminal device may communicate with the satellite node by using an NR-Uu interface. The satellite node may communicate with the terrestrial receiving station by using a satellite radio interface (satellite radio interface, SRI). The SRI interface may be used to transmit an interface message (for example, an N2 or N3 interface message) between the satellite node and a 5G CN. The terrestrial receiving station may communicate with the 5G CN by using an N1 interface, an N2 interface, or an N3 interface, and the 5G CN may communicate with a data network by using an N6 interface.

A third type of satellite node has a DU processing function. The satellite node is a DU for a terrestrial terminal device. Communication between the satellite node and the terminal device is basically consistent with communication between the terminal device and a DU in a normal 5G land communications system, as shown in FIG. 4. The terminal device may communicate with the satellite node by using an NR-Uu interface. The satellite node may communicate with a terrestrial receiving station (for example, may include a gNB-CU) by using an SRI interface. The SRI interface may transmit an F1 interface message between the satellite and the terrestrial receiving station. The terrestrial receiving station may communicate with a 5G CN by using an N1/2/3 interface. The 5G CN may communicate with a data network by using an N6 interface.

### Resource allocation manner for sidelink

Currently, in some communications systems (for example, NR), two resource configuration manners for sidelink resources are defined, that is, a mode 1 and a mode 2.

In the mode 1, a network device schedules a sidelink resource for a terminal device.

Currently, the mode 1 may be divided into two manners: dynamic resource allocation (dynamic resource allocation) and sidelink configured grant (sidelink configured grant, SL CG). In the dynamic resource allocation, the network device may allocate a sidelink transmission resource to the terminal device by transmitting downlink control information (downlink control information, DCI). In the sidelink configured grant, when a sidelink resource is configured for the terminal device, if the terminal device has data to be transmitted, the terminal device may transmit the data by using the configured sidelink resource, without requesting another sidelink resource from the network device. Therefore, a latency of a sidelink may be reduced in the resource configuration manner of configured grant.

The configured grant is further divided into two types. In a type 1 (Type1) of the configured grant, a sidelink resource configuration is fully based on radio resource control (radio resource control, RRC) signalling. In a type 2 (Type2) of the configured grant, a sidelink resource configuration in a communications system may be performed by using both RRC signalling and layer 1 (layer 1, L1) signalling, where the L1 signalling is used for indicating activation and deactivation of an RRC configuration.

In some implementations, the network device may schedule, for the terminal device, a sidelink resource for a single time of transmission. In some other implementations, the network device may further configure a semi-static sidelink resource for the terminal device.

In the mode 2, a terminal device independently selects a sidelink resource from a resource pool.

In this mode, a process executed by the terminal device includes a resource probing process and/or a resource selection process. In the resource probing process, the terminal device may detect occupancy of a sidelink resource by demodulating sidelink control information (sidelink control information, SCI). Alternatively, the terminal device may detect occupancy of a sidelink resource by measuring a received power of a sidelink.

### DRX process

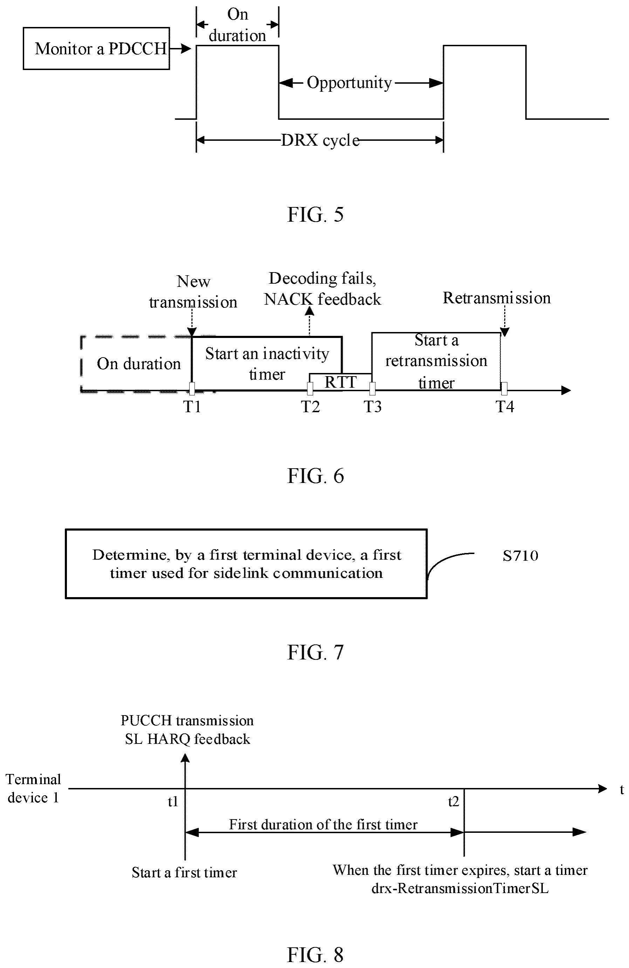

In some communications protocols (such as, 5G NR), it is specified that a network device may configure a DRX function for a terminal device, so that the terminal device discontinuously monitors a physical downlink control channel (physical downlink control channel, PDCCH), to reduce power consumption for the terminal device. Referring to FIG. 5, one DRX cycle includes DRX on duration (drx on duration) and opportunity for DRX (opportunity for DRX). A terminal device monitors a PDCCH in the DRX on duration, and does not monitor the PDCCH in the opportunity for DRX.

In some implementations, each MAC entity may have one DRX configuration. A DRX configuration parameter may include one or more of the following parameters:
a DRX on duration timer (drx-onDurationTimer), used for determining duration during which the terminal device remains awake at the beginning of a DRX cycle;
a DRX slot offset (drx-SlotOffset), used for determining a delay for the terminal device to start the DRX on duration timer;
a DRX inactivity timer (drx-InactivityTimer), used for determining duration during which the terminal device may continue to monitor the PDCCH after receiving a PDCCH indicating an initial uplink transmission or an initial downlink transmission;
a DRX downlink retransmission timer (drx-RetransmissionTimerDL), used for determining maximum duration during which the terminal device monitors a PDCCH indicating downlink retransmission scheduling, where each downlink HARQ process other than a broadcast hybrid automatic repeat request (hybrid automatic repeat request, HARQ) process usually corresponds to one DRX downlink retransmission timer;
a DRX uplink retransmission timer (drx-RetransmissionTimerUL), used for determining maximum duration during which the terminal device monitors a PDCCH indicating uplink retransmission scheduling, where each uplink HARQ process usually corresponds to one DRX uplink retransmission timer;
a DRX long cycle start offset (drx-LongCycleStartOffset), used for configuring a DRX long cycle, and a start subframe offset of a DRX long cycle and a DRX short cycle;
a DRX short cycle start offset (drx-ShortCycle), used for configuring a DRX short cycle, which is usually an optional configuration;
a DRX short cycle timer (drx-ShortCycleTimer), used for determining duration during which the terminal device is in a DRX short cycle (and no PDCCH is received), which is usually an optional configuration;
a DRX-HARQ-downlink round-trip time (round trip time, RTT) timer (drx-HARQ-RTT-TimerDL), used for determining minimum waiting time required by the terminal device to expect to receive a PDCCH indicating downlink scheduling, where each downlink HARQ process other than a broadcast HARQ process may usually correspond to one DRX-HARQ-downlink round-trip time timer;
a DRX-HARQ-uplink round-trip time timer (drx-HARQ-RTT-TimerUL), used for determining minimum waiting time required by the terminal device to expect to receive a PDCCH indicating uplink scheduling, where each uplink HARQ process usually corresponds to one DRX-HARQ-uplink round-trip time timer;
a DRX sidelink retransmission timer (drx-RetransmissionTimerSL), used for determining maximum duration during which the terminal device monitors a PDCCH indicating SL retransmission scheduling, where in some implementations, each SL HARQ process may correspond to one DRX sidelink retransmission timer; or
a DRX-HARQ-sidelink round-trip time timer (drx-HARQ-RTT-TimerSL), used for determining minimum waiting time required for the terminal device to expect to receive a PDCCH indicating SL retransmission, where in some implementations, each SL HARQ process may correspond to one DRX-HARQ-sidelink round-trip time timer.

In some implementations, if the terminal device is configured with the DRX configuration parameter, the terminal device needs to monitor the PDCCH in the DRX on duration. The DRX on duration includes the following cases.

Case 1: If any timer of the drx-onDurationTimer, drx-InactivityTimer, drx-RetransmissionTimerDL, drx-RetransmissionTimerUL, drx-RetransmissionTimerSL, and ra-ContentionResolutionTimer is running, the terminal device is in the DRX on duration.

Case 2: If an SR is transmitted on the PUCCH and is in a pending (pending) state, the terminal device is in the DRX on duration.

Case 3: In a contention-based random access procedure, if the terminal device has not received one initial transmission indicated by a PDCCH scrambled by a cell-radio network temporary identifier (cell-radio network temporary identifier, C-RNTI) after successfully receiving a random access response, the terminal device is in the DRX on duration.

In some implementations, the terminal device may determine, depending on whether the terminal device is currently located in a short DRX cycle or a long DRX cycle, a time for starting the drx-onDurationTimer. The following uses the description in a communication protocol.
1> If the short DRX cycle is used, and a current subframe meets [(SFN × 10) + subframe number (subframe number)] modulo (drx-ShortCycle) = (drx-StartOffset) modulo (drx-ShortCycle); or
1> if the long DRX cycle is used, and a current subframe meets [(SFN × 10) + subframe number (subframe number)] modulo (drx-LongCycle) = drx-StartOffset:
   2> start drx-onDurationTimer at an instant after (drx-SlotOffset) slot (slot) from the beginning of the current subframe.

The foregoing describes several cases in which the terminal device is in the DRX on duration and to which embodiments of this application are applicable. The following describes start (or restart) conditions of the foregoing timers.

In some implementations, a start condition of the timer drx-InactivityTimer may include that: the terminal device starts drx-InactivityTimer corresponding to the HARQ process when receiving a PDCCH indicating initial transmission (for example, any one of downlink initial transmission, uplink initial transmission, or SL initial transmission).

In some implementations, a stop condition of the timer drx-RetransmissionTimerDL includes that: the terminal device stops drx-RetransmissionTimerDL corresponding to the HARQ process when receiving a PDCCH indicating downlink transmission, or receiving a MAC PDU on a configured downlink grant resource.

In some implementations, a start condition of the timer drx-RetransmissionTimerDL includes that: the terminal device starts drx-HARQ-RTT-TimerDL corresponding to the HARQ process after completing transmission of feedback for the HARQ process of this downlink transmission.

In some other implementations, a start condition of the timer drx-RetransmissionTimerDL includes that: the terminal device starts drx-RetransmissionTimerDL corresponding to a HARQ process if a timer drx-HARQ-RTT-TimerDL corresponding to the HARQ of the terminal device expires and decoding of downlink data transmitted by using the HARQ process fails.

In some implementations, a stop condition of the timer drx-RetransmissionTimerUL includes that: the terminal device stops drx-RetransmissionTimerUL corresponding to the HARQ process when receiving a PDCCH indicating uplink transmission, or when transmitting a MAC PDU on a configured uplink grant resource.

In some implementations, a start condition of the timer drx-RetransmissionTimerUL includes that: the terminal device starts drx-HARQ-RTT-TimerUL corresponding to the HARQ process after completing a first repetition (repetition) of this PUSCH.

In some other implementations, a start condition of the timer drx-RetransmissionTimerUL includes that: the terminal device starts drx-RetransmissionTimerUL corresponding to the HARQ process if a timer drx-HARQ-RTT-TimerUL corresponding to a HARQ of the terminal device expires.

In some implementations, a stop condition of the timer drx-RetransmissionTimerSL includes that: the terminal device stops drx-RetransmissionTimerSL corresponding to the HARQ process when receiving a PDCCH indicating SL transmission, or when transmitting a MAC PDU on a configured SL grant (configured sidelink grant) resource.

In addition, if the terminal device is configured with a physical uplink control channel (physical uplink control channel, PUCCH) resource, the terminal device starts drx-HARQ-RTT-TimerSL corresponding to the HARQ process in a first (time) symbol located after a PUCCH transmission for carrying the SL HARQ feedback ends, or in a first (time) symbol located after a PUCCH resource for carrying the SL HARQ feedback ends (but the terminal device does not perform transmission by using the PUCCH resource).

On the contrary, if the terminal device is not configured with a PUCCH resource, for the configured SL grant, the terminal device starts drx-HARQ-RTT-TimerSL corresponding to the HARQ process in a first (time) symbol located after a corresponding PSSCH transmission ends. For SL transmission indicated by a PDCCH, the terminal device starts drx-HARQ-RTT-TimerSL corresponding to the HARQ process in a first (time) symbol located after an occasion of the PDCCH ends.

In some implementations, in a case that a timer drx-HARQ-RTT-TimerSL corresponding to a HARQ of the terminal device expires, if the terminal device transmits, on a PUCCH, HARQ NACK feedback corresponding to the HARQ process, the terminal device starts drx-RetransmissionTimerSL corresponding to the HARQ process in a first (time) symbol located after the drx-HARQ-RTT-TimerSL expires.

In some implementations, in a case that a timer drx-HARQ-RTT-TimerSL corresponding to a HARQ of the terminal device expires, if the terminal device generates HARQ NACK feedback corresponding to the HARQ process but does not transmit the HARQ NACK feedback on a PUCCH, the terminal device starts drx-RetransmissionTimerSL corresponding to the HARQ process in a first (time) symbol located after the drx-HARQ-RTT-TimerSL expires.

In some implementations, in a case that a timer drx-HARQ-RTT-TimerSL corresponding to a HARQ of the terminal device expires, if no PUCCH resource is configured for the SL grant, the terminal device starts drx-RetransmissionTimerSL corresponding to the HARQ process in a first (time) symbol located after the drx-HARQ-RTT-TimerSL expires.

### SL-DRX process

In a sidelink communication process, due to a power saving requirement of a terminal device, a suitable power saving technology (for example, an SL-DRX mechanism) is introduced to reduce power consumption of the terminal device. In some previous communications protocols (for example, R16), a receive terminal device that performs sidelink communication is always in an active state by default, that is, the receive terminal device needs to perform continuous reception by default. This continuous reception behavior causes some unnecessary power consumption. Later, to reduce the power consumption of the terminal device that performs sidelink communication, an SL-DRX mechanism is introduced. The SL-DRX mechanism controls "activation" and "inactivation" of a receiving behavior of the terminal device on a sidelink to meet a power saving requirement in sidelink communication.

Similar to a discontinuous reception technology in a downlink, some similar timers are also defined in the sidelink to control an SL-DRX behavior. The following describes related timers.

An SL-DRX on duration timer (sl-drx-onDurationTimer) is a periodic DRX on duration timer and is used for determining duration for waiting to receive a physical sidelink control channel (physical sidelink control channel, PSCCH)/physical sidelink shared channel (physical sidelink shared channel, PSSCH) after the terminal device is activated. In some implementations, if the terminal device successfully decodes the PSCCH/PSSCH, the terminal device may initiate an inactivity timer and keep in an activated state.

An SL-DRX inactivity timer (sl-drx-InactivityTimer): Before the timer expires, the terminal device keeps in an activated state and waits to receive a next new transmission of a PSCCH/PSSCH. Generally, each time a newly transmitted data is received, the terminal device may restart the timer.

An SL-DRX retransmission timer (sl-drx-RetransmissionTimer) is used for determining maximum duration during which the terminal device keeps in an activated state and waits for receiving a next retransmission of a PSCCH/PSSCH in a specific sidelink transmission process.

An SL-DRX round-trip time timer (sl-drx-HARQ-RTT-Timer): Before the timer expires, the terminal device does not expect to receive retransmission data in a specific sidelink transmission process.

SL-DRX cycle (sl-drx-Cycle) is a length of time between a location where one SL-DRX on duration is enabled and a location where a next SL-DRX on duration is enabled.

The foregoing describes the timers involved in the SL-DRX mechanism. For ease of understanding, the following describes, with reference to FIG. 6, the SL-DRX mechanism to which embodiments of this application are applicable. The following uses a receive terminal in sidelink communication as an example to describe use of the timers involved in the SL-DRX mechanism.

Referring to FIG. 6, at an instant T1, the receive terminal is in an SL-DRX activated state. When receiving a new transmission of a message, the receive terminal may start sl-drx-InactivityTimer. Generally, the receive terminal may receive data during running of the sl-drx-InactivityTimer.

At an instant T2, if decoding of the message by the receive terminal fails, the receive terminal may feed back a NACK to a transmit terminal, and start sl-drx-HARQ-RTT-Timer after a corresponding PSFCH.

At an instant T3, if the sl-drx-HARQ-RTT-Timer expires, the receive terminal may start a corresponding sl-drx-RetransmissionTimer to wait retransmission of a message.

At an instant T4, the receive terminal receives retransmission of the message transmitted by the transmit terminal.

It should be noted that, for a receive terminal that uses SL-DRX, an active time of the receive terminal includes SL-DRX on duration, SL-DRX inactivity timer running time, SL-DRX retransmission timer running time, and a period of time after a CSI report request is transmitted. Within the active time of the receive terminal, the receive terminal may perform SCI detection for data receiving (including first-stage SCI on a PSCCH and second-stage SCI on a PSSCH). Within an inactive time of the receive terminal, the receive terminal may skip the SCI detection for data receiving.

In addition, for a transmit terminal that supports the SL-DRX mechanism, the transmit terminal may maintain a group of timers corresponding to SL-DRX timers applied by one or more receive terminals for each sidelink communication link (that is, for unicast, each sidelink communication link refers to each pair of source/destination L2 IDs; for broadcast or multicast, each sidelink communication link refers to each destination L2 ID), and determine, by using the group of timers, a time at which the one or more receive terminals may receive sidelink data transmission, so as to determine a time at which the transmit terminal may transmit sidelink data transmission. When the transmit terminal needs to transmit data, SL-DRX of the one or more receive terminals is used as a consideration for resource selection, that is, when a transmission resource is selected, whether a receive terminal is in an activated state for sidelink transmission is considered. In addition, a corresponding enhancement is also performed on logical channel prioritization (logical channel prioritization, LCP), so as to ensure that a slot resource location corresponding to transmission data is located at an SL-DRX activation location of a corresponding receive terminal, so that data can be correctly received.

It can be learned from the foregoing description that in the NTN, a transmission delay between the network device and the terminal device is relatively large. Currently, to consider an impact of a larger transmission delay on a Uu DRX mechanism in the NTN, the Uu DRX mechanism is enhanced in some communications protocols (such as R17). However, in some scenarios, the terminal device that performs SL communication in the NTN also needs to communicate with the network device. In the NTN, there is no available solution on how to enhance an SL-DRX mechanism supported by the terminal device, which may cause a mismatch between the SL-DRX mechanism and a relatively large transmission delay in the NTN, thus causing that communication between a network device and the terminal device that supports the SL-DRX mechanism fails.

The foregoing problem is described by using a first timer (for example, a timer drx-HARQ-RTT-TimerSL) introduced in the SL-DRX mechanism as an example. The first timer may be used for determining a minimum waiting time required by the terminal device to expect to receive a PDCCH indicating a sidelink retransmission. There is a terminal 1 that supports the SL-DRX mechanism in the NTN. The terminal 1 is configured as an SL resource allocation mode 1. In this case, a resource used by the terminal 1 for SL transmission is completely scheduled and determined by a network device (for example, a service network device). In other words, within a period of time after running of the first timer ends, the terminal 1 starts to monitor a PDCCH that is transmitted by the network device and that indicates the sidelink retransmission. However, currently, a relatively large transmission delay in the NTN is not considered in setting of the first timer, which may cause a problem of a mismatch between set duration of the first timer and the relatively large transmission delay in the NTN, thereby causing that communication between the network device and the terminal 1 that supports the SL-DRX mechanism fails.

Therefore, for the foregoing problem, an embodiment of this application provides a method for sidelink communication. In this method, first duration of a first timer may be associated with a transmission delay in an NTN, which helps improve a degree of matching between the first timer and a relatively large transmission delay in the NTN, and improves a possibility of successful communication between the network device and the terminal device that supports an SL-DRX mechanism.

For ease of understanding, the following describes a schematic flowchart of a method for sidelink communication according to an embodiment of this application with reference to FIG. 7. The method shown in FIG. 7 includes step S710.

In step S710, a first terminal device determines a first timer used for sidelink communication.

In some implementations, the first terminal device may be a sidelink terminal device that communicates with a network device in an NTN. For example, the first terminal device may be a transmit terminal in the sidelink communication.

In some implementations, the first timer may be associated with an SL-DRX mechanism. In some implementations, the first timer is used for determining a waiting time (for example, a minimum waiting time) required by the terminal device to expect to receive a PDCCH indicating a sidelink retransmission. For example, the first timer may be a timer drx-HARQ-RTT-TimerSL. Correspondingly, a solution in embodiments of this application may be understood as an enhancement of a timer for a Uu interface in the SL-DRX mechanism. In some other implementations, the first timer may be an SL-DRX retransmission timer (sl-drx-RetransmissionTimer). Certainly, the first timer may alternatively be another timer in the SL-DRX mechanism, which is not limited in embodiments of this application.

In some implementations, first duration of the first timer is associated with a transmission delay in an NTN in which the first terminal device is located.

In embodiments of this application, the transmission delay in the NTN is not specifically limited. For example, the transmission delay in the NTN may include a round-trip time (round-trip time, RTT) for wireless signal transmission between a terminal device and a network device in an NTN cell. Therefore, the transmission delay in the NTN may also be denoted as "UE-gNB RTT". For another example, the transmission delay in the NTN may alternatively be a unidirectional delay.

In addition, in embodiments of this application, the transmission delay in the NTN may be a transmission delay between the first terminal device and a first network device in the NTN cell, and the first network device may be, for example, a service network device of the first terminal device. Certainly, in embodiments of this application, the transmission delay in the NTN may alternatively be a transmission delay between the first network device and a terminal device near the first terminal device in the NTN cell, or the transmission delay in the NTN may alternatively be a maximum transmission delay between a terminal device and a network device in the NTN cell, or the transmission delay in the NTN may alternatively be an average transmission delay between a terminal device and a network device in the NTN cell. This is not limited in embodiments of this application.

In some scenarios, the first terminal device may move in the NTN cell. Therefore, a transmission delay between the first terminal device and the first network device may vary. Therefore, the first terminal device may determine a plurality of transmission delays in the NTN. To improve accuracy of determining the first duration, the first terminal device may select, from the plurality of transmission delays in the NTN, a transmission delay in the NTN determined in a last or latest time to determine the first duration.

In embodiments of this application, there are a plurality of manners of determining the first duration based on the transmission delay in the NTN. For example, the first duration may be determined based only on the transmission delay in the NTN. For another example, the first duration may be determined based on duration configured by first SL-DRX configuration information and the transmission delay in the NTN.

In some implementations, the first SL-DRX configuration information may include "DRX-ConfigSL", and the configuration information is generally used for configuring duration of drx-HARQ-RTT-TimerSL and duration of drx-RetransmissionTimerSL. Correspondingly, the first duration may be determined based on the duration of the drx-HARQ-RTT-TimerSL configured by DRX-ConfigSL and the transmission delay in the NTN.

In some implementations, the first duration may be equal to a sum of the duration configured by the first SL-DRX configuration information and the transmission delay in the NTN. Certainly, in embodiments of this application, the first duration may alternatively be greater than the sum of the duration configured by the first SL-DRX configuration information and the transmission delay in the NTN, for example, a time offset is added to the sum of the duration configured by the first SL-DRX configuration information and the transmission delay in the NTN, which is not specifically limited in embodiments of this application.

The foregoing describes a manner of determining the first duration of the first timer in embodiments of this application, and the following describes a scenario in which the first timer whose duration is the first duration is applied in embodiments of this application.

In some implementations, the step S710 includes: in a case that a sidelink resource of the first terminal device is allocated by the first network device, and a PUCCH resource is configured for the first terminal device, determining, by the first terminal device, that duration of the first timer is the first duration.

In some implementations, the step S710 includes: in a case that a sidelink resource of the first terminal device is allocated by the first network device, and a PUCCH resource used for transmitting SL HARQ feedback corresponding to a first SL HARQ process is configured for the first terminal device, determining, by the first terminal device, that duration of a first timer corresponding to the first SL HARQ process is the first duration.

In some implementations, the step S710 includes: in a case that a sidelink resource of the first terminal device is allocated by the first network device, and the first terminal device needs to transmit, to the first network device by using a PUCCH resource, SL HARQ feedback corresponding to a first SL HARQ process, determining, by the first terminal device, that duration of a first timer corresponding to the first SL HARQ process is the first duration.

In some implementations, the PUCCH resource may be used by the first terminal device to transmit SL HARQ feedback to the first network device. The PUCCH resource may be configured by using configuration information "sl-PUCCH-Config". Certainly, in embodiments of this application, the PUCCH resource may be further configured in another manner.

A manner in which the first network device allocates the sidelink resource to the first terminal device is not limited in embodiments of this application. For example, the first network device may configure a resource by using a sidelink grant, and correspondingly, the first terminal device may transmit a MAC PDU on the configured sidelink grant (configured sidelink grant). For another example, the first network device may indicate SL transmission to the first terminal device by using a PDCCH.

Correspondingly, the scenario of applying the first timer whose duration is the first duration is described by using description in a communication protocol.
1> In a case that a cell in which the first terminal device is currently located is an NTN cell, if the first terminal device transmits a MAC PDU on a configured SL grant (configured sidelink grant), or if the first terminal device receives a PDCCH indicating SL transmission;
   2> if a PUCCH resource is configured for the first terminal device, and/or if the first terminal device needs to transmit, to the first network device by using a PUCCH resource, SL HARQ feedback corresponding to a first SL HARQ process,
      3> the first terminal device determines that duration of a first timer corresponding to the first SLHARQ process is the first duration.

In some other implementations, if the scenario of using the first duration is not met, duration of the first timer may be determined based on the duration configured by the first SL-DRX configuration information.

In other words, the step S710 includes: in a case that a sidelink resource of the first terminal device is configured by the first network device, and no PUCCH resource is configured for the first terminal device, determining, by the first terminal device, that duration of the first timer is second duration, and the second duration is duration configured by the first SL-DRX configuration information.

In some implementations, in a case that a sidelink resource of the first terminal device is allocated by the first network device, and no PUCCH resource for transmitting SL HARQ feedback corresponding to a first SL HARQ process is configured for the first terminal device, the first terminal device determines that duration of the first timer corresponding to the first SL HARQ process is second duration, where the second duration is duration configured by the first SL-DRX configuration information.

In some implementations, in a case that a sidelink resource of the first terminal device is configured by the first network device, and the first terminal device does not need to transmit, to the first network device by using a PUCCH resource, SL HARQ feedback corresponding to a first SL HARQ process, the first terminal device determines that duration of the first timer corresponding to the first SL HARQ process is second duration, where the second duration is duration configured by the first SL-DRX configuration information.

The foregoing describes a scenario to which the first timer whose duration is the first duration or the second duration is applicable. The following describes a start time of the first timer whose duration is the first duration and a start time of the first timer whose duration is the second duration.

For the start time of the first timer with the first duration, in some implementations, the terminal device may start a first timer corresponding to a HARQ process at a first time domain unit (for example, a symbol) located after a PUCCH transmission used for carrying SL HARQ feedback ends.

It should be noted that, the terminal device may perform SL HARQ feedback by using the PUCCH transmission. Certainly, the terminal device may alternatively not perform SL HARQ feedback by using the PUCCH transmission. This is not limited in embodiments of this application.

In addition, in embodiments of this application, when the terminal device starts the first timer, the terminal device may stop a timer drx-RetransmissionTimerSL corresponding to the HARQ process. Certainly, in embodiments of this application, the terminal device may alternatively not stop the timer drx-RetransmissionTimerSL corresponding to the HARQ process.

For the start time of the first timer with the second duration, in some implementations, if an SL grant is configured for the terminal device, the terminal device may start the first timer corresponding to the HARQ process at a first time domain unit (for example, a symbol) located after a corresponding PSSCH transmission ends.

In some other implementations, if a network device indicates, by using a PDCCH, SL transmission to the terminal device, the terminal device may start the first timer corresponding to the HARQ process at a first time domain unit (for example, a symbol) located after an occasion (occasion) of the PDCCH ends.

In addition, in embodiments of this application, when the terminal device starts the first timer, the terminal device may stop a timer drx-RetransmissionTimerSL corresponding to the HARQ process. Certainly, in embodiments of this application, the terminal device may alternatively not stop the timer drx-RetransmissionTimerSL corresponding to the HARQ process.

For ease of understanding, the following describes a solution of using the first timer whose duration is the first duration in embodiments of this application with reference to FIG. 8.

Referring to FIG. 8, at an instant t1, a terminal device 1 transmits SL HARQ feedback for a HARQ process 1 by using a PUCCH resource, and meanwhile, the terminal device 1 starts a first timer corresponding to the HARQ process 1, where duration of the first timer is first duration.

At an instant t2 after the first duration, the first timer expires, and the terminal device 1 may start a timer drx-RetransmissionTimerSL corresponding to the HARQ process 1.

In some other scenarios, SL reception of a receive terminal that performs SL communication in an NTN is also related to communication between the transmit terminal that performs SL communication and a service network device. For example, sidelink communication is performed between a terminal device 1 and a terminal device 2 in an NTN cell. For the terminal device 1 serving as a transmit terminal in the sidelink communication, a resource used for SL transmission may be scheduled and determined by a network device. After that, the terminal device 1 further needs to indicate, by using SCI, a resource for SL retransmission scheduling to the terminal device 2 serving as a receive terminal in the sidelink communication. Correspondingly, the terminal device 2 needs to monitor the SCI for SL retransmission scheduling. Therefore, the receive terminal (namely, the terminal device 2) is also affected by a relatively large transmission delay between the network device and the terminal device 1 in the NTN. In other words, for the receive terminal, a related timer of an SL-DRX mechanism supported by the receive terminal cannot match a relatively large transmission delay in the NTN.

Therefore, for the foregoing problem, an embodiment of this application further provides a method for sidelink communication. In this solution, first duration of a second timer determined by a second terminal device may be associated with a transmission delay in an NTN, which helps improve a matching degree between the second timer of the second terminal device and the transmission delay in the NTN.

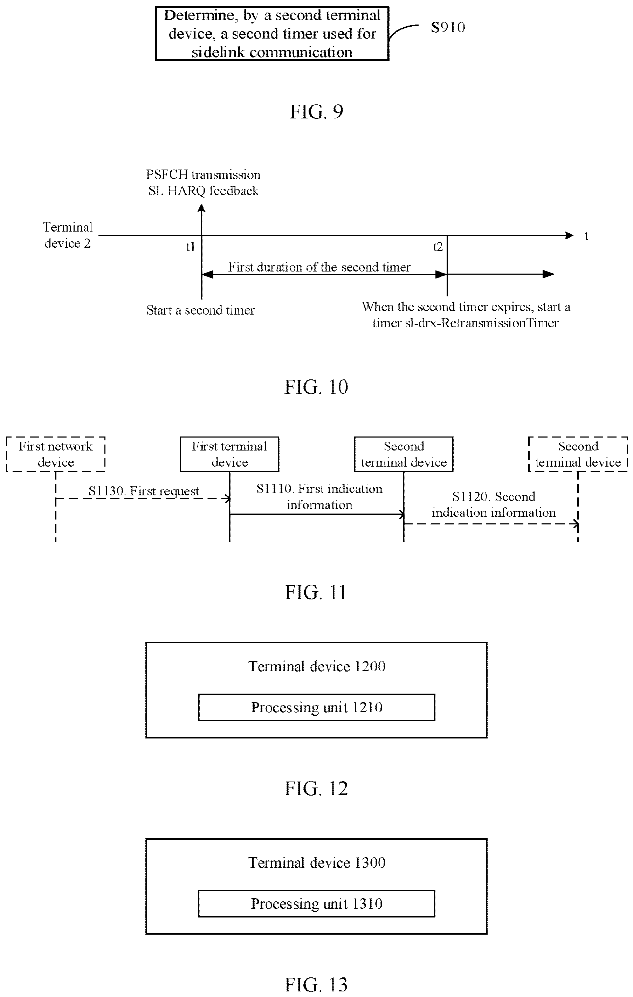

For ease of understanding, the following describes the method for sidelink communication in embodiments of this application with reference to FIG. 9. The method shown in FIG. 9 includes step S910.

In step S910, a second terminal device determines a second timer used for sidelink communication.

In some implementations, the second terminal device may be a terminal device that performs sidelink communication. For example, the second terminal device may be a receive terminal in the sidelink communication. In some other implementations, a transmit terminal in the sidelink communication may be a terminal device (for example, the first terminal device described above) that communicates with a network device in an NTN.

In some implementations, the second timer may be associated with an SL-DRX mechanism. In some implementations, the second timer is used for determining a time period during which the second terminal device does not expect to receive retransmission data in a specific sidelink transmission process. For example, the second timer may be a timer sl-drx-HARQ-RTT-Timer, that is, before the timer expires, the second terminal device does not expect to receive retransmission data in a specific sidelink transmission process. In this case, the solution in embodiments of this application may be understood as an enhancement to a timer for a PC5 interface in the SL-DRX mechanism. For another example, the second timer may be a timer sl-DRX-GC-HARQ-RTT-Timer. Certainly, the second timer may alternatively be another timer in the SL-DRX mechanism, which is not limited in embodiments of this application.

In some implementations, first duration of the second timer is associated with a transmission delay in the NTN.

In embodiments of this application, the transmission delay in the NTN is not specifically limited. For example, the transmission delay in the NTN may include a round-trip time (round-trip time, RTT) for wireless signal transmission between a terminal device and a network device in an NTN cell. Therefore, the transmission delay in the NTN may also be denoted as "UE-gNB RTT". For another example, the transmission delay in the NTN may alternatively be a unidirectional delay.

In addition, in embodiments of this application, the transmission delay in the NTN may be a transmission delay between a first terminal device and a first network device in the NTN cell, and the first network device may be, for example, a service network device of the first terminal device. Certainly, in embodiments of this application, the transmission delay in the NTN may alternatively be a transmission delay between the first network device and a terminal device near the first terminal device in the NTN cell, or the transmission delay in the NTN may alternatively be a maximum transmission delay between a terminal device and a network device in the NTN cell, or the transmission delay in the NTN may alternatively be an average transmission delay between a terminal device and a network device in the NTN cell. This is not limited in embodiments of this application.

As described above, the transmission delay in the NTN may be a transmission delay between the first terminal device and the first network device in the NTN cell. Correspondingly, to obtain the transmission delay in the NTN for the second terminal device, the first terminal device may transmit the transmission delay in the NTN to the second terminal device, for example, the transmission delay in the NTN may be transmitted by using first indication information. The following describes in detail a transmission manner of the first indication information. For brevity, details are not described herein again.

In some scenarios, the first terminal device may move in an NTN cell. Therefore, a transmission delay between the first terminal device and the first network device varies. Therefore, the first terminal device may determine a plurality of transmission delays in the NTN. Correspondingly, the first terminal device may transmit the plurality of transmission delays in the NTN to the second terminal device. To improve accuracy of determining duration of the second timer, the second terminal device may select, from the plurality of transmission delays in the NTN, a transmission delay in the NTN received at a last time to determine the first duration of the second timer; in other words, a receiving time for a first transmission delay selected by the second terminal device is later than a receiving time of another first transmission delay in the NTN, where the another transmission delay in the NTN may be a transmission delay in the NTN, different from the first transmission delay, in the plurality of transmission delays in the NTN.

In embodiments of this application, there are a plurality of manners of determining the first duration of the second timer based on the transmission delay in the NTN. For example, the first duration of the second timer may be determined based on the transmission delay in the NTN. For another example, the first duration of the second timer may be determined based on duration configured by second SL-DRX configuration information and the transmission delay in the NTN.

In some implementations, the second SL-DRX configuration information may be related to unicast transmission and/or multicast transmission. In an example in which the second SL-DRX configuration information is related to unicast transmission, the second SL-DRX configuration information may be used for configuring parameters such as sl-drx-HARQ-RTT-Timer1 and sl-drx-HARQ-RTT-Timer2. Correspondingly, the first duration of the second timer may be determined based on duration of the sl-drx-HARQ-RTT-Timer configured by the second SL-DRX configuration information and the transmission delay in the NTN.

In an example in which the second SL-DRX configuration information is related to multicast transmission, the second SL-DRX configuration information may be used for configuring parameters such as sl-DRX-GC-HARQ-RTT-Timer1 and sl-DRX-GC-HARQ-RTT-Timer2. Correspondingly, the first duration of the second timer may be determined based on duration of the sl-DRX-GC-HARQ-RTT-Timer configured by the second SL-DRX configuration information and the transmission delay in the NTN.

A transmission manner of the second SL-DRX configuration information is not limited in embodiments of this application. For example, if the first terminal device may communicate with the first network device (for example, if an SL resource allocation mode of the first terminal device is the SL resource allocation mode 1), the second SL-DRX configuration information may be transmitted by the first network device to the first terminal device, and forwarded by the first terminal device to the second terminal device. Certainly, in embodiments of this application, the second SL-DRX configuration information may alternatively be transmitted by a service network device of the second terminal device to the second terminal device.

In some implementations, the first duration of the second timer may be equal to a sum of the duration configured by the second SL-DRX configuration information and the transmission delay in the NTN. Certainly, in embodiments of this application, the first duration of the second timer may alternatively be greater than the sum of the duration configured by the second SL-DRX configuration information and the transmission delay in the NTN, for example, a time offset is added to the sum of the duration configured by the second SL-DRX configuration information and the transmission delay in the NTN, which is not specifically limited in embodiments of this application.

The foregoing describes a manner of determining the first duration of the second timer in embodiments of this application, and the following describes a scenario in which the second timer is applied in embodiments of this application.

In some implementations, the step S910 includes: in a case that a first condition is met, determining, by the second terminal device, that duration of the second timer is the first duration.

The first condition includes one or more of the following: a PSFCH resource is configured on a sidelink grant associated with sidelink communication and HARQ feedback is enabled; or a PUCCH resource is configured for the first terminal device and HARQ feedback between the first terminal device and the first network device is enabled.

The PSFCH resource being configured on the sidelink grant associated with sidelink communication and the HARQ feedback being enabled may be understood as that: the second terminal device may transmit the HARQ feedback to the first terminal device by using a PSFCH.

The HARQ feedback between the first terminal device and the first network device being enabled may be understood as that: the first terminal may transmit, to the first network device by using a PUCCH, the HARQ feedback corresponding to a sidelink HARQ process used by the sidelink grant. It may also be understood as that, a PUCCH resource used for transmitting, to the first network device, the HARQ feedback corresponding to a sidelink HARQ process used for the sidelink grant is configured for the first terminal device.

For ease of understanding, the following illustrates a scenario in which duration of the second timer is the first duration in embodiments of this application. For example, if a PSFCH resource is configured for an SL grant indicated by SCI received by the second terminal device, and a current cell is an NTN cell, the second terminal device enables HARQ feedback for an SL HARQ process used by the SL grant, and in a case that a PUCCH resource is configured for the first terminal device and SL HARQ feedback is enabled for the SL HARQ process used by the SL grant, a value of sl-drx-HARQ-RTT-Timer corresponding to the HARQ process is set to a sum of the sl-drx-HARQ-RTT-Timer1 and the first transmission delay described above.

In embodiments of this application, when implementations of the foregoing two first conditions are combined, it may be understood that the second terminal device may transmit the HARQ feedback to the first terminal device by using the PSFCH, and correspondingly, the first terminal device may transmit the SL HARQ feedback to the first network device by using the PUCCH resource. The process of transmitting, by the first terminal device, the SL HARQ feedback to the first network device may be affected by the transmission delay in the NTN. Thus, in this case, the second terminal device may determine that duration of the second timer is the first duration.

In some other implementations, if the first condition is not met, the second terminal device determines that the duration of the second timer is second duration, where the second duration of the second timer may be the duration configured by the second SL-DRX configuration information described above.

The foregoing describes a manner of determining the duration of the second timer. The following describes, based on a HARQ feedback manner, a start time of the second timer whose duration is the first duration and/or the second duration.

In case 1, a start time of the second timer is described when the HARQ feedback manner is feeding back an ACK or a NACK.

In some implementations, if a PSFCH resource is configured for an SL grant indicated by SCI, and CSI indicates that HARQ feedback is enabled and the SCI indicates that a propagation type is unicast, the second terminal device starts sl-drx-HARQ-RTT-Timer corresponding to the HARQ process at a first time domain unit (for example, a symbol) located after a PSFCH transmission used for carrying the SL HARQ feedback ends.

In some implementations, if a PSFCH resource is configured for an SL grant indicated by SCI, and CSI indicates that HARQ feedback is enabled and the SCI indicates that a propagation type is multicast, the second terminal device starts sl-drx-HARQ-RTT-Timer corresponding to the HARQ process at a first time domain unit (for example, a symbol) located after a PSFCH transmission used for carrying the SL HARQ feedback ends.

It should be noted that, the second terminal device may transmit the SL HARQ feedback by using the PSFCH resource. Certainly, the second terminal device may alternatively not transmit the SL HARQ feedback by using the PSFCH resource, for example, due to a problem of an SL/UL priority, the second terminal device does not transmit the SL HARQ feedback by using the PSFCH resource. This is not limited in embodiments of this application.

In case 2, a start time of the second timer is described when the HARQ feedback manner is feeding back a NACK-only (NACK-only).

In some implementations, if a PSFCH resource is configured for an SL grant indicated by SCI, and if CSI indicates that HARQ feedback is enabled and the SCI indicates that a propagation type is multicast, the second terminal device starts sl-drx-HARQ-RTT-Timer corresponding to the HARQ process at a first time domain unit (for example, a symbol) located after a PSFCH transmission used for carrying the SL HARQ feedback ends.

In some implementations, if a PSFCH resource is configured for an SL grant indicated by SCI, if CSI indicates that HARQ feedback is enabled and the SCI indicates that a propagation type is multicast, and the SL HARQ feedback is a NACK, the second terminal device starts sl-drx-HARQ-RTT-Timer corresponding to the HARQ process at a first time domain unit (for example, a symbol) located after a PSFCH transmission used for carrying the SL HARQ feedback ends.

It should be noted that, the second terminal device may transmit the SL HARQ feedback by using the PSFCH resource. Certainly, the second terminal device may alternatively not transmit the SL HARQ feedback by using the PSFCH resource, for example, due to a problem of an SL/UL priority, the second terminal device does not transmit the SL HARQ feedback by using the PSFCH resource. This is not limited in embodiments of this application.

For ease of understanding, the following describes a solution of using the second timer whose duration is the first duration in embodiments of this application with reference to FIG. 10.

Referring to FIG. 10, at an instant t1, a terminal device 2 transmits SL HARQ feedback for a HARQ process 1 by using a PSFCH resource, and meanwhile, the terminal device 2 starts a second timer corresponding to the HARQ process 1, where duration of the second timer is first duration.

At an instant t2 after the first duration, the second timer expires, and the terminal device 2 may start a timer sl-drx-RetransmissionTimer corresponding to the HARQ process 1.

As described above, the first terminal device may transmit first indication information to the second terminal device, to indicate a transmission delay in an NTN, so that the second terminal device determines duration of the second timer. The following describes a transmission manner of the first indication information according to an embodiment of this application with reference to FIG. 11.

FIG. 11 is a schematic flowchart of a transmission method of first indication information according to an embodiment of this application. The method shown in FIG. 11 includes step S1110.

In step S1110, a first terminal device transmits first indication information to a second terminal device.

In some implementations, the first indication information is used for indicating a transmission delay in an NTN. As described above, in some implementations, the transmission delay in the NTN may be an RTT delay. Therefore, the first indication information is also referred to as "UE-gNB RTT indication information". Certainly, in embodiments of this application, the transmission delay in the NTN indicated by the first indication information may alternatively be any one of the foregoing transmission delays in the NTN.

For example, the transmission delay in the NTN indicated in the first indication information is a latest transmission delay obtained before the first terminal device transmits the first indication information. Alternatively, the transmission delay in the NTN indicated in the first indication information may be a transmission delay in the NTN most recently obtained when the first terminal device performs packeting.

In some implementations, the first indication information may be carried in one or more of a PC5-S message, PC5 interface radio resource control PC5-RRC signalling, a MAC CE, or a PSCCH.

In some implementations, the first indication information is transmitted in one or more of a multicast manner, a unicast manner, or a broadcast manner.

A manner of triggering the first indication information is not limited in embodiments of this application. In some implementations, the manner of triggering of the first indication information includes one or more of the following: periodic triggering; triggering based on a first event; triggering based on a request from a first network device; triggering based on a request from the second terminal device; or being determined based on an implementation of the first terminal device.

The manner of periodic triggering is used as an example, and a configuration manner of a period is not limited in embodiments of this application. In some implementations, the period may be configured by a service network device of the first terminal device. In some other implementations, the period may be configured by the second terminal device. Certainly, in embodiments of this application, the first terminal device may alternatively be determined based on a recommended value (or an expected value) provided by the second terminal device.

In an example in which the triggering manner includes triggering based on the first event, in some implementations, the first event may be associated with a change of a transmission delay in an NTN between the first terminal device and a first network device. For example, the first event may include that a difference between a current transmission delay and a target transmission delay between the first terminal device and the first network device is greater than or equal to a first threshold.

In some implementations, the target transmission delay is a transmission delay that is between the first terminal device and the first network device and that is most recently indicated by the first terminal device to the second terminal device before the current transmission delay is determined. Certainly, in embodiments of this application, the target transmission delay may alternatively be a pre-configured reference value, or a predefined reference value. This is not limited in embodiments of this application.

It should be noted that, the first threshold may be configured by the first network device of the first terminal device. For example, the first threshold may be directly configured by the first network device. For another example, the first threshold may be determined by the first network device based on an expected value or a recommended value indicated by the second terminal device. This is not limited in embodiments of this application.

In some implementations, the manner of triggering the first indication information including triggering based on the first event includes one or more of the following: triggering the first indication information in a case that the first event is met; triggering the first indication information in a case that the first event is configured or reconfigured; or triggering the first indication information in a case that the first event is configured or reconfigured and the first indication information has not been transmitted by the first terminal device to the second terminal device. Certainly, in embodiments of this application, in a case that the first indication information has not been transmitted by the first terminal device to the second terminal device, the first indication information may also be triggered.

In an example in which the triggering manner includes the triggering based on the request from the first network device, still referring to FIG. 11, in step S1130, the first network device may transmit a first request to the first terminal device, to request the first terminal device to transmit the first indication information to the second terminal device. Accordingly, in response to the first request, the first terminal device may transmit the first indication information to the second terminal device.

In some implementations, the first request may carry configuration information of the first indication information, for example, an SL resource for transmitting the first indication information. Certainly, in embodiments of this application, the configuration information of the first indication information and the first request may alternatively be independent information, which is not limited in embodiments of this application.

In an example in which the triggering manner includes triggering based on a request from the second terminal device, the second terminal device may transmit a second request to the first terminal device to request the first indication information. Accordingly, in response to the second request, the first terminal device may transmit the first indication information to the second terminal device.

In an example in which the triggering manner includes being determined based on an implementation of the first terminal device, the first terminal device may trigger the first indication information based on an internal implementation.

The foregoing describes the manner of triggering the first indication information in embodiments of this application, and the following describes a solution of canceling first indication information that has been triggered in embodiments of this application. In other words, the foregoing method further includes: in a case that a third condition is met, canceling, by the first terminal device, the first indication information that has been triggered.

In some implementations, the third condition includes one or more of the following: the first terminal device completes transmission of the first indication information; or a difference between a current transmission delay and a target transmission delay between the first terminal device and the first network device is less than a first threshold.

In an example in which the third condition includes that the first terminal device completes transmission of the first indication information, in some implementations, assuming that the first indication information may be transmitted by using a MAC CE, the first terminal device completing transmission of the first indication information may include that the first terminal device has transmitted, by using a sidelink resource, the MAC CE carrying the first indication information.

For example, if the first terminal device currently has an SL-SCH resource available for new transmission and the SL-SCH resource may carry the MAC CE for transmitting the first indication information, and a MAC header corresponding to the MAC CE of the first indication information may be added, it may be considered that the first terminal device completes transmission of the first indication information.

In an example in which the third condition includes that the difference between the current transmission delay and the target transmission delay between the first terminal device and the first network device is less than the first threshold, the target transmission delay is a transmission delay that is between the first terminal device and the first network device and that is most recently indicated by the first terminal device to the second terminal device before the current transmission delay is determined. Certainly, in embodiments of this application, the target transmission delay may alternatively be a pre-configured reference value, or a predefined reference value. This is not limited in embodiments of this application.

It should be noted that, the first threshold may be configured by the first network device of the first terminal device. For example, the first threshold may be directly configured by the first network device. For another example, the first threshold may be determined by the first network device based on an expected value or a recommended value indicated by the second terminal device. This is not limited in embodiments of this application.

In some scenarios, the second terminal device may be in an RRC connected state. In this case, still referring to FIG. 11, in step S1120, the second terminal device may transmit second indication information to the second network device, and the second indication information is used for indicating the transmission delay in the NTN indicated by the first indication information. Alternatively, the second terminal device may forward the first indication information to the second network device. In this case, the first indication information may be the same as the second indication information.

In some implementations, the second indication information may be transmitted by using sidelink UE information (Sidelink UE information). Certainly, the second indication information may be transmitted by using other information, which is not limited in embodiments of this application.

Correspondingly, the second network device may generate first DRX configuration information based on the second indication information, and transmit the first DRX configuration information to the second terminal device. The first DRX configuration information is configured to control a second terminal device to monitor a behavior of a PDCCH.

In embodiments of this application, the second terminal device may transmit the transmission delay of the NTN to the second network device by using the second indication information, and configure (for example, DRX configuration of a Uu interface) the second terminal device by using the second network device, so that a DRX active time (for example, a time for monitoring a PDCCH) of a Uu interface of the second terminal device overlaps with an SL-DRX active time (a time for monitoring SCI) of the second terminal device as much as possible, which helps reduce duration during which the second terminal device is in the DRX activation time, thereby reducing power consumption of the second terminal device.

In some scenarios, the first terminal device has first indication information to be transmitted, but there is no suitable sidelink resource for transmission. Therefore, for this problem, an embodiment of this application further provides a solution for requesting a sidelink resource. The following uses an example in which the first information is carried in a MAC CE for description.

In some implementations, the method includes: triggering, by the first terminal device, an SR in a case that a second condition is met.

The second condition includes one or more of the following: the first terminal device currently has no SL-SCH resources available for new transmission; the first terminal device currently has an SL-SCH resource available for new transmission, and the MAC CE is not allowed to be carried in the SL-SCH resource; or an SL resource allocation mode 1 is configured for the first terminal device.

For example, for first indication information that has been triggered (but not cancelled), the first terminal device may trigger the SR when the following two conditions both are met.

Condition 1: The first terminal device currently has no SL-SCH resources available for new transmission; or the first terminal device currently has an SL-SCH resource available for new transmission, but the MAC CE of the first indication information cannot be carried in the SL-SCH (for example, a MAC header corresponding to the MAC CE of the first indication information is added).

Condition 2: The SL resource allocation mode 1 is configured for the first terminal device.

In some implementations, at most one PUCCH for transmitting an SR is configured on each UL BWP of the first terminal device. Certainly, in embodiments of this application, at most one PUCCH for transmitting an SR may be configured on part of UL BWPs of the first terminal device.

In some other implementations, a priority of the SR is equal to a priority for carrying the MAC CE. Certainly, in embodiments of this application, the priority of the SR may alternatively be different from a priority for carrying the MAC CE.

In some implementations, an SR configuration corresponding to the SR may be an SR configuration corresponding to the SR triggered by the first indication information.

In some implementations, the SR is cancelled based on one or more of the following: the MAC CE that has been triggered is cancelled; the MAC CE that has been triggered and not cancelled can be transmitted in a sidelink grant of the first terminal device; or a sidelink resource allocation mode 2 is configured or reconfigured for the first terminal device. The MAC CE is a MAC CE that carries the first indication information.

That the MAC CE can be transmitted in the sidelink grant of the first terminal device may be replaced with that the MAC CE may be transmitted in the sidelink grant of the first terminal device. In other words, a resource size of the sidelink grant of the first terminal device is enough to transmit the MAC CE.

Certainly, in embodiments of this application, in addition to the foregoing SR cancellation method, another SR cancellation method may further be included, which is not limited in embodiments of this application. For example, it may be determined, based on a configuration of a network device, whether the MAC CE that carries the first indication information can trigger the SR.

The method embodiments of this application are described above in detail with reference to FIG. 1 to FIG. 11. Apparatus embodiments of this application are described below in detail with reference to FIG. 12 to FIG. 16. It should be understood that the description of the method embodiments corresponds to the description of the apparatus embodiments, and therefore, for a part that is not described in detail, reference may be made to the foregoing method embodiments.

FIG. 12 is a schematic diagram of a terminal device according to an embodiment of this application. The terminal device 1200 shown in FIG. 12 is a first terminal device. The terminal device 1200 shown in FIG. 12 includes a processing unit 1210.

The processing unit 1210 is configured to determine a first timer used for sidelink communication, where first duration of the first timer is associated with a transmission delay in a non-terrestrial network NTN in which the first terminal device is located.

In a possible implementation, the first duration of the first timer is determined based on duration configured by first sidelink discontinuous reception SL-DRX configuration information and the transmission delay in the NTN.

In a possible implementation, the transmission delay in the NTN includes a transmission delay between a first network device and the first terminal device in the NTN.

In a possible implementation, the processing unit is configured to: in a case that a sidelink resource of the first terminal device is allocated by a first network device, and a physical uplink control channel PUCCH resource is configured for the first terminal device, determine that duration of the first timer is the first duration.

In a possible implementation, the processing unit is configured to: in a case that the sidelink resource of the first terminal device is configured by the first network device, and no PUCCH resource is configured for the first terminal device, determine that the duration of the first timer is second duration, where the second duration is duration configured by the first SL-DRX configuration information.

In a possible implementation, the first network device is a service network device of the first terminal device.

In a possible implementation, the first timer is used for determining a minimum waiting time required by the first terminal device to expect to receive a physical downlink control channel PDCCH that indicates sidelink retransmission.

FIG. 13 is a schematic diagram of a terminal device according to another embodiment of this application. The terminal device shown in FIG. 13 is a second terminal device. The terminal device 1300 shown in FIG. 13 includes a processing unit 1310.

The processing unit 1310 is configured to determine a second timer used for sidelink communication, where first duration of the second timer is associated with a transmission delay in a non-terrestrial network NTN.

In a possible implementation, the second timer is used for determining duration during which the second terminal device does not expect to receive retransmission data corresponding to a sidelink communication process.

In a possible implementation, first duration of the second timer is determined based on duration configured by second sidelink discontinuous reception SL-DRX configuration information and the transmission delay in the NTN.

In a possible implementation, the second terminal device is a receive end of the sidelink communication, a transmit end of the sidelink communication is a first terminal device, the transmission delay in the NTN includes a transmission delay between a first network device and the first terminal device in the NTN, and the first network device is a service network device of the first terminal device.

In a possible implementation, the processing unit is configured to: in a case that a first condition is met, determine that duration of the second timer is the first duration, where the first condition includes one or more of the following: a physical sidelink feedback channel PSFCH resource is configured for a sidelink grant associated with the sidelink communication and hybrid automatic repeat request HARQ feedback is enabled; or a physical uplink control channel PUCCH resource is configured for the first terminal device, and HARQ feedback between the first terminal device and the first network device is enabled.

In a possible implementation, the terminal device further includes: a first receiving unit, configured to receive first indication information transmitted by the first terminal device, where the first indication information is used for indicating the transmission delay in the NTN.

In a possible implementation, the transmission delay indicated by the first indication information is a latest transmission delay obtained before the first terminal device transmits the first indication information.

In a possible implementation, a manner of triggering the first indication information includes one or more of the following: periodic triggering; triggering based on a first event; triggering based on a request from a first network device; triggering based on a request from the second terminal device; or being determined based on an implementation of the first terminal device.

In a possible implementation, the manner of triggering the first indication information includes the triggering based on the first event, and the first event includes that a difference between a current transmission delay and a target transmission delay between the first terminal device and the first network device is greater than or equal to a first threshold. The target transmission delay is a transmission delay that is between the first terminal device and the first network device and that is most recently indicated by the first terminal device to the second terminal device before the current transmission delay is determined.

In a possible implementation, the manner of triggering the first indication information including the triggering based on the first event includes one or more of the following: triggering the first indication information in a case that the first event is met; triggering the first indication information in a case that the first event is configured or reconfigured; or triggering the first indication information in a case that the first event is configured or reconfigured and the first indication information has not been transmitted by the first terminal device to the second terminal device.

In a possible implementation, the first indication information may be carried in one or more of a PC5-S message, PC5 interface radio resource control PC5-RRC signalling, a medium access control control element MAC CE, or a physical sidelink control channel PSCCH.

In a possible implementation, the first indication information is transmitted in one or more of a multicast manner, a unicast manner, or a broadcast manner.

In a possible implementation, the terminal device further includes: a transmitting unit, configured to transmit second indication information to a second network device, where the second indication information is used for indicating the transmission delay in the NTN.

In a possible implementation, the terminal device further includes: a second receiving unit, configured to receive first DRX configuration information transmitted by the second network device, where the first DRX configuration information is determined based on the second indication information, and the first DRX configuration information is used for controlling the second terminal device to monitor a behavior of a PDCCH.

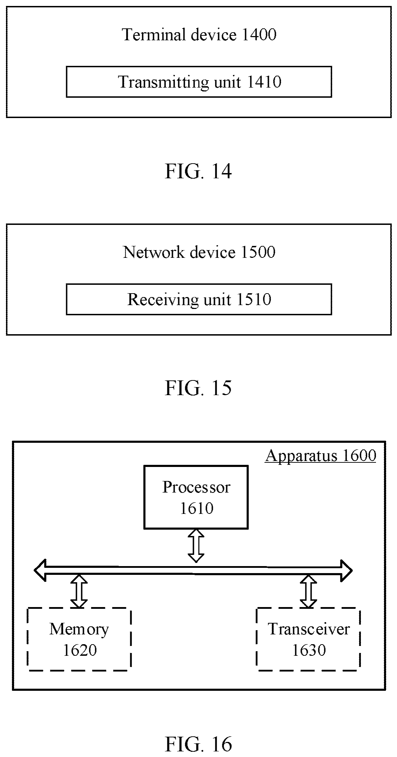

FIG. 14 is a schematic diagram of a terminal device according to another embodiment of this application. The terminal device shown in FIG. 14 is a first terminal device. The terminal device 1400 shown in FIG. 14 includes a transmitting unit 1410.

The transmitting unit 1410 is configured to transmit first indication information to a second terminal device, where the first indication information is used for indicating a transmission delay in an NTN, and the transmission delay in the NTN is associated with first duration of a second timer used by the second terminal device for sidelink communication.

In a possible implementation, a manner of triggering the first indication information includes one or more of the following: periodic triggering; triggering based on a first event; triggering based on a request from a first network device, where the first network device is a service network device of the first terminal device; triggering based on a request from the second terminal device; or being determined based on an implementation of the first terminal device.

In a possible implementation, the manner of triggering the first indication information includes the triggering based on the first event, and the first event includes that a difference between a current transmission delay and a target transmission delay between the first terminal device and the first network device is greater than or equal to a first threshold. The target transmission delay is a transmission delay that is between the first terminal device and the first network device and that is most recently indicated by the first terminal device to the second terminal device before the current transmission delay is determined.

In a possible implementation, the manner of triggering the first indication information including the triggering based on the first event includes one or more of the following: triggering the first indication information in a case that the first event is met; triggering the first indication information in a case that the first event is configured or reconfigured; or triggering the first indication information in a case that the first event is configured or reconfigured and the first indication information has not been transmitted by the first terminal device to the second terminal device.

In a possible implementation, the first terminal device further includes a first processing unit, and the processing unit is configured to: in a case that a third condition is met, cancel the first indication information that has been triggered, where the third condition includes one or more of the following: the first terminal device completes transmission of the first indication information; or a difference between a target transmission delay and a current transmission delay between the first terminal device and the first network device is less than a first threshold. The target transmission delay is a transmission delay that is between the first terminal device and the first network device and that is most recently indicated by the first terminal device to the second terminal device before the current transmission delay is determined.

In a possible implementation, if the third condition includes that the first terminal device completes transmission of the first indication information, the third condition includes that the terminal device has transmitted, by using a sidelink resource, a MAC CE that carries the first indication information.

In a possible implementation, the first indication information may be carried in one or more of a PC5-S message, PC5 interface radio resource control PC5-RRC signalling, a medium access control control element MAC CE, or a physical sidelink control channel PSCCH.

In a possible implementation, if the first indication information is carried in the MAC CE, the first terminal device further includes a second processing unit, and the second processing unit is configured to trigger a scheduling request SR in a case that a second condition is met.

In a possible implementation, the second condition includes one or more of the following: the first terminal device currently has no SL-SCH resources available for new transmission; the first terminal device currently has an SL-SCH resource available for new transmission, and the MAC CE is not allowed to be carried in the SL-SCH resource; or an SL resource allocation mode 1 is configured for the first terminal device.

In a possible implementation, the SR is cancelled based on one or more of the following: the MAC CE that has been triggered is cancelled; the MAC CE that has been triggered and not cancelled can be transmitted in a sidelink grant of the first terminal device; or a sidelink resource allocation mode 2 is configured or reconfigured for the first terminal device.

In a possible implementation, in a case that the first indication information is carried in a MAC CE, whether the MAC CE can trigger an SR is determined by a configuration of a network device.

In a possible implementation, at most one PUCCH used to transmit the SR is configured on each uplink bandwidth part BWP of the first terminal device; and/or a priority of the SR is equal to a priority for carrying the MAC CE.

In a possible implementation, the first indication information is transmitted in one or more of a multicast manner, a unicast manner, or a broadcast manner.

FIG. 15 is a schematic diagram of a network device according to an embodiment of this application. The network device shown in FIG. 15 is a second network device. The network device 1500 shown in FIG. 15 includes a receiving unit 1510.

The receiving unit 1510 is configured to receive second indication information transmitted by a second terminal device, where the second indication information is used for indicating a transmission delay of an NTN corresponding to a first terminal device that performs sidelink communication with the second terminal device.

In a possible implementation, the network device further includes a processing unit, and the processing unit is configured to: generate first DRX configuration information based on the second indication information; and transmit the first DRX configuration information to the second terminal device, where the first DRX configuration information is used for controlling the second terminal device to monitor a behavior of a PDCCH.

In an optional embodiment, the processing unit 1210 may be a processor 1610. The terminal device 1200 may further include a transceiver 1630 and a memory 1620. Details are shown in FIG. 16.

In an optional embodiment, the processing unit 1310 may be a processor 1610. The terminal device 1300 may further include a transceiver 1630 and a memory 1620. Details are shown in FIG. 16.

In an optional embodiment, the transmitting unit 1410 may be the transceiver 1630. The terminal device 1400 may further include a processor 1610 and a memory 1620, as shown in FIG. 16.

In an optional embodiment, the receiving unit 1510 may be a transceiver 1630. The network device 1500 may further include the processor 1610 and the memory 1620, as shown in FIG. 16.

FIG. 16 is a schematic structural diagram of a communications apparatus according to an embodiment of this application. Dashed lines in FIG. 16 indicate that a unit or module is optional. The apparatus 1600 may be configured to implement the methods described in the foregoing method embodiments. The apparatus 1600 may be a chip, a terminal device, or a network device.

The apparatus 1600 may include one or more processors 1610. The processor 1610 may support the apparatus 1600 in implementing the methods described in the foregoing method embodiments. The processor 1610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1600 may further include one or more memories 1620. The memory 1620 stores a program, and the program may be executed by the processor 1610, to cause the processor 1610 to execute the methods described in the foregoing method embodiments. The memory 1620 may be independent of the processor 1610 or may be integrated into the processor 1610.

The apparatus 1600 may further include a transceiver 1630. The processor 1610 may communicate with another device or chip by using the transceiver 1630. For example, the processor 1610 may transmit data to and receive data from another device or chip by using the transceiver 1630.

An embodiment of this application further provides a computer-readable storage medium for storing a program. The computer-readable storage medium may be applied to a terminal or a network device provided in embodiments of this application, and the program causes a computer to execute the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to execute the methods performed by the terminal or the network device in various embodiments of this application.

An embodiment of this application further provides a computer program. The computer program may be applied to the terminal or the network device provided in embodiments of this application, and the computer program causes the computer to execute the methods performed by the terminal or the network device in embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sidelink communication, comprising:
determining, by a first terminal device, a first timer used for sidelink communication, wherein first duration of the first timer is associated with a transmission delay in a non-terrestrial network NTN in which the first terminal device is located.

2. The method according to claim 1, wherein the first duration of the first timer is determined based on duration configured by first sidelink discontinuous reception SL-DRX configuration information and the transmission delay in the NTN.

3. The method according to claim 2, wherein the transmission delay in the NTN comprises a transmission delay between a first network device and the first terminal device in the NTN.

4. The method according to claim 2 or 3, wherein the determining, by the first terminal device, the first timer used for sidelink communication comprises:
in a case that a sidelink resource of the first terminal device is allocated by a first network device, and a physical uplink control channel PUCCH resource is configured for the first terminal device, determining, by the first terminal device, that duration of the first timer is the first duration.

5. The method according to claim 4, wherein the determining, by the first terminal device, the first timer used for sidelink communication comprises:
in a case that the sidelink resource of the first terminal device is configured by the first network device, and no PUCCH resource is configured for the first terminal device, determining, by the first terminal device, that the duration of the first timer is second duration, wherein the second duration is duration configured by the first SL-DRX configuration information.

6. The method according to any one of claims 3 to 5, wherein the first network device is a service network device of the first terminal device.

7. The method according to any one of claims 1 to 6, wherein the first timer is used for determining a minimum waiting time required by the first terminal device to expect to receive a physical downlink control channel PDCCH that indicates sidelink retransmission.

8. A method for sidelink communication, comprising:
determining, by a second terminal device, a second timer used for sidelink communication, wherein first duration of the second timer is associated with a transmission delay in a non-terrestrial network NTN.

9. The method according to claim 8, wherein the second timer is used for determining duration during which the second terminal device does not expect to receive retransmission data corresponding to a sidelink communication process.

10. The method according to claim 8 or 9, wherein first duration of the second timer is determined based on duration configured by second sidelink discontinuous reception SL-DRX configuration information and the transmission delay in the NTN.

11. The method according to claim 10, wherein the second terminal device is a receive end of the sidelink communication, a transmit end of the sidelink communication is a first terminal device, the transmission delay in the NTN comprises a transmission delay between a first network device and the first terminal device in the NTN, and the first network device is a service network device of the first terminal device.

12. The method according to claim 11, wherein the determining, by the second terminal device, the second timer used for sidelink communication comprises:
in a case that a first condition is met, determining, by the second terminal device, that duration of the second timer is the first duration, wherein the first condition comprises one or more of following:
a physical sidelink feedback channel PSFCH resource is configured for a sidelink grant associated with the sidelink communication and hybrid automatic repeat request HARQ feedback is enabled; or
a physical uplink control channel PUCCH resource is configured for the first terminal device, and HARQ feedback between the first terminal device and the first network device is enabled.

13. The method according to any one of claims 10 to 12, wherein the method further comprises:
receiving, by the second terminal device, first indication information transmitted by the first terminal device, wherein the first indication information is used for indicating the transmission delay in the NTN.

14. The method according to claim 13, wherein the transmission delay indicated by the first indication information is a latest transmission delay obtained before the first terminal device transmits the first indication information.

15. The method according to claim 13, wherein a manner of triggering the first indication information comprises one or more of the following:
periodic triggering;
triggering based on a first event;
triggering based on a request from a first network device;
triggering based on a request from the second terminal device; or
being determined based on an implementation of the first terminal device.

16. The method according to claim 15, wherein the manner of triggering the first indication information comprises the triggering based on the first event, and the first event comprises:
a difference between a current transmission delay and a target transmission delay between the first terminal device and the first network device is greater than or equal to a first threshold,
wherein the target transmission delay is a transmission delay that is between the first terminal device and the first network device and that is most recently indicated by the first terminal device to the second terminal device before the current transmission delay is determined.

17. The method according to claim 15 or 16, wherein the manner of triggering the first indication information comprising the triggering based on the first event comprises one or more of following:
triggering the first indication information in a case that the first event is met;
triggering the first indication information in a case that the first event is configured or reconfigured; or
triggering the first indication information in a case that the first event is configured or reconfigured and the first indication information has not been transmitted by the first terminal device to the second terminal device.

18. The method according to any one of claims 13 to 17, wherein the first indication information is capable of being carried in one or more of a PC5-S message, PC5 interface radio resource control PC5-RRC signalling, a medium access control control element MAC CE, or a physical sidelink control channel PSCCH.

19. The method according to any one of claims 13 to 18, wherein the first indication information is transmitted in one or more of a multicast manner, a unicast manner, or a broadcast manner.

20. The method according to any one of claims 8 to 19, wherein the method further comprises:
transmitting, by the second terminal device, second indication information to a second network device, wherein the second indication information is used for indicating the transmission delay in the NTN.

21. The method according to claim 20, wherein the method further comprises:
receiving, by the second terminal device, first DRX configuration information transmitted by the second network device, wherein the first DRX configuration information is determined based on the second indication information, and the first DRX configuration information is used for controlling the second terminal device to monitor a behavior of a PDCCH.

22. A method for sidelink communication, comprising:
transmitting, by a first terminal device, first indication information to a second terminal device, wherein the first indication information is used for indicating a transmission delay in an NTN, and the transmission delay in the NTN is associated with first duration of a second timer used by the second terminal device for sidelink communication.

23. The method according to claim 22, wherein a manner of triggering the first indication information comprises one or more of following:
periodic triggering;
triggering based on a first event;
triggering based on a request from a first network device, wherein the first network device is a service network device of the first terminal device;
triggering based on a request from the second terminal device; or
being determined based on an implementation of the first terminal device.

24. The method according to claim 23, wherein the manner of triggering the first indication information comprises the triggering based on the first event, and the first event comprises that a difference between a current transmission delay and a target transmission delay between the first terminal device and the first network device is greater than or equal to a first threshold,
wherein the target transmission delay is a transmission delay that is between the first terminal device and the first network device and that is most recently indicated by the first terminal device to the second terminal device before the current transmission delay is determined.

25. The method according to claim 23 or 24, wherein the manner of triggering the first indication information comprising the triggering based on the first event comprises one or more of following:
triggering the first indication information in a case that the first event is met;
triggering the first indication information in a case that the first event is configured or reconfigured; or
triggering the first indication information in a case that the first event is configured or reconfigured and the first indication information has not been transmitted by the first terminal device to the second terminal device.

26. The method according to any one of claims 22 to 25, wherein the method further comprises:
in a case that a third condition is met, canceling, by the first terminal device, the first indication information that has been triggered, wherein the third condition comprises one or more of following:
the first terminal device completes transmission of the first indication information; or
a difference between a current transmission delay and a target transmission delay between the first terminal device and the first network device is less than a first threshold, wherein the target transmission delay is a transmission delay that is between the first terminal device and the first network device and that is most recently indicated by the first terminal device to the second terminal device before the current transmission delay is determined.

27. The method according to claim 26, wherein in a case that the third condition comprises that the first terminal device completes transmission of the first indication information,
the third condition comprises that the terminal device has transmitted, by using a sidelink resource, a MAC CE that carries the first indication information.

28. The method according to any one of claims 22 to 27, wherein the first indication information is capable of being carried in one or more of a PC5-S message, PC5 interface radio resource control PC5-RRC signalling, a medium access control control element MAC CE, or a physical sidelink control channel PSCCH.

29. The method according to any one of claims 22 to 28, wherein in a case that the first indication information is carried in the MAC CE, the method further comprises:
triggering, by the first terminal device, a scheduling request SR in a case that a second condition is met.

30. The method according to claim 29, wherein the second condition comprises one or more of following:
the first terminal device currently has no SL-SCH resources available for new transmission;
the first terminal device currently has an SL-SCH resource available for new transmission, and the MAC CE is not allowed to be carried in the SL-SCH resource; or
an SL resource allocation mode 1 is configured for the first terminal device.

31. The method according to claim 29 or 30, wherein the SR is canceled based on one or more of following:
a MAC CE that has been triggered is cancelled;
a MAC CE that has been triggered and not cancelled is capable of being transmitted in a sidelink grant of the first terminal device; or
a sidelink resource allocation mode 2 is configured or reconfigured for the first terminal device.

32. The method according to any one of claims 22 to 28, wherein in a case that the first indication information is carried in a MAC CE, whether the MAC CE is capable of triggering an SR is determined by a configuration of a network device.

33. The method according to any one of claims 29 to 32, wherein at most one PUCCH used to transmit the SR is configured on each uplink bandwidth part BWP of the first terminal device; and/or
a priority of the SR is equal to a priority for carrying the MAC CE.

34. The method according to any one of claims 29 to 33, wherein the first indication information is transmitted in one or more of a multicast manner, a unicast manner, or a broadcast manner.

35. A method for sidelink communication, comprising:
receiving, by a second network device, second indication information transmitted by a second terminal device, wherein the second indication information is used for indicating a transmission delay of an NTN corresponding to a first terminal device that performs sidelink communication with the second terminal device.

36. The method according to claim 35, wherein the method further comprises:
generating, by the second network device, first DRX configuration information based on the second indication information; and
transmitting, by the second network device, the first DRX configuration information to the second terminal device, wherein the first DRX configuration information is used for controlling the second terminal device to monitor a behavior of a PDCCH.

37. A terminal device, wherein the terminal device is a first terminal device and comprises:
a processing unit, configured to determine a first timer used for sidelink communication, wherein first duration of the first timer is associated with a transmission delay in a non-terrestrial network NTN in which the first terminal device is located.

38. The terminal device according to claim 37, wherein the first duration of the first timer is determined based on duration configured by first sidelink discontinuous reception SL-DRX configuration information and the transmission delay in the NTN.

39. The terminal device according to claim 38, wherein the transmission delay in the NTN comprises a transmission delay between a first network device and the first terminal device in the NTN.

40. The terminal device according to claim 38 or 39, wherein the processing unit is further configured to:
in a case that a sidelink resource of the first terminal device is allocated by a first network device, and a physical uplink control channel PUCCH resource is configured for the first terminal device, determine that duration of the first timer is the first duration.

41. The terminal device according to claim 40, wherein the processing unit is further configured to:
in a case that the sidelink resource of the first terminal device is configured by the first network device, and no PUCCH resource is configured for the first terminal device, determine that the duration of the first timer is second duration, wherein the second duration is duration configured by the first SL-DRX configuration information.

42. The terminal device according to any one of claims 39 to 41, wherein the first network device is a service network device of the first terminal device.

43. The terminal device according to any one of claims 37 to 42, wherein the first timer is used for determining a minimum waiting time required by the first terminal device to expect to receive a physical downlink control channel PDCCH that indicates sidelink retransmission.

44. A terminal device, wherein the terminal device is a second terminal device and comprises:
a processing unit, configured to determine a second timer used for sidelink communication, wherein first duration of the second timer is associated with a transmission delay in a non-terrestrial network NTN.

45. The terminal device according to claim 44, wherein the second timer is used for determining duration during which the second terminal device does not expect to receive retransmission data corresponding to a sidelink communication process.

46. The terminal device according to claim 44 or 45, wherein first duration of the second timer is determined based on duration configured by second sidelink discontinuous reception SL-DRX configuration information and the transmission delay in the NTN.

47. The terminal device according to claim 46, wherein the second terminal device is a receive end of the sidelink communication, a transmit end of the sidelink communication is a first terminal device, the transmission delay in the NTN comprises a transmission delay between a first network device and the first terminal device in the NTN, and the first network device is a service network device of the first terminal device.

48. The terminal device according to claim 47, wherein the processing unit is further configured to:
in a case that a first condition is met, determine that duration of the second timer is the first duration, wherein the first condition comprises one or more of following:
a physical sidelink feedback channel PSFCH resource is configured for a sidelink grant associated with the sidelink communication and hybrid automatic repeat request HARQ feedback is enabled; or
a physical uplink control channel PUCCH resource is configured for the first terminal device, and HARQ feedback between the first terminal device and the first network device is enabled.

49. The terminal device according to any one of claims 46 to 48, wherein the terminal device further comprises:
a first receiving unit, configured to receive first indication information transmitted by the first terminal device, wherein the first indication information is used for indicating the transmission delay in the NTN.

50. The terminal device according to claim 49, wherein the transmission delay indicated by the first indication information is a latest transmission delay obtained before the first terminal device transmits the first indication information.

51. The terminal device according to claim 49, wherein a manner of triggering the first indication information comprises one or more of following:
periodic triggering;
triggering based on a first event;
triggering based on a request from a first network device;
triggering based on a request from the second terminal device; or
being determined based on an implementation of the first terminal device.

52. The terminal device according to claim 51, wherein the manner of triggering the first indication information comprises the triggering based on the first event, and the first event comprises:
a difference between a current transmission delay and a target transmission delay between the first terminal device and the first network device is greater than or equal to a first threshold,
wherein the target transmission delay is a transmission delay that is between the first terminal device and the first network device and that is most recently indicated by the first terminal device to the second terminal device before the current transmission delay is determined.

53. The terminal device according to claim 51 or 52, wherein the manner of triggering the first indication information comprising the triggering based on the first event comprises one or more of following:
triggering the first indication information in a case that the first event is met;
triggering the first indication information in a case that the first event is configured or reconfigured; or
triggering the first indication information in a case that the first event is configured or reconfigured and the first indication information has not been transmitted by the first terminal device to the second terminal device.

54. The terminal device according to any one of claims 49 to 53, wherein the first indication information is capable of being carried in one or more of a PC5-S message, PC5 interface radio resource control PC5-RRC signalling, a medium access control control element MAC CE, or a physical sidelink control channel PSCCH.

55. The terminal device according to any one of claims 49 to 54, wherein the first indication information is transmitted in one or more of a multicast manner, a unicast manner, or a broadcast manner.

56. The terminal device according to any one of claims 44 to 55, wherein the terminal device further comprises:
a transmitting unit, configured to transmit second indication information to a second network device, wherein the second indication information is used for indicating the transmission delay in the NTN.

57. The terminal device according to claim 56, wherein the terminal device further comprises:
a second receiving unit, configured to receive first DRX configuration information transmitted by the second network device, wherein the first DRX configuration information is determined based on the second indication information, and the first DRX configuration information is used for controlling the second terminal device to monitor a behavior of a PDCCH.

58. A first terminal device, comprising:
a transmitting unit, configured to transmit first indication information to a second terminal device, wherein the first indication information is used for indicating a transmission delay in an NTN, and the transmission delay in the NTN is associated with first duration of a second timer used by the second terminal device for sidelink communication.

59. The first terminal device according to claim 58, wherein a manner of triggering the first indication information comprises one or more of following:
periodic triggering;
triggering based on a first event;
triggering based on a request from a first network device, wherein the first network device is a service network device of the first terminal device;
triggering based on a request from the second terminal device; or
being determined based on an implementation of the first terminal device.

60. The first terminal device according to claim 59, wherein the manner of triggering the first indication information comprises the triggering based on the first event, and the first event comprises that a difference between a current transmission delay and a target transmission delay between the first terminal device and the first network device is greater than or equal to a first threshold,
wherein the target transmission delay is a transmission delay that is between the first terminal device and the first network device and that is most recently indicated by the first terminal device to the second terminal device before the current transmission delay is determined.

61. The first terminal device according to claim 59 or 60, wherein the manner of triggering the first indication information comprising the triggering based on the first event comprises one or more of following:
triggering the first indication information in a case that the first event is met;
triggering the first indication information in a case that the first event is configured or reconfigured; or
triggering the first indication information in a case that the first event is configured or reconfigured and the first indication information has not been transmitted by the first terminal device to the second terminal device.

62. The first terminal device according to any one of claims 58 to 61, wherein the first terminal device further comprises a first processing unit, and the first processing unit is configured to:
in a case that a third condition is met, cancel the first indication information that has been triggered, wherein the third condition comprises one or more of following:
the first terminal device completes transmission of the first indication information; or
a difference between a current transmission delay and a target transmission delay between the first terminal device and the first network device is less than a first threshold, wherein the target transmission delay is a transmission delay that is between the first terminal device and the first network device and that is most recently indicated by the first terminal device to the second terminal device before the current transmission delay is determined.

63. The first terminal device method according to claim 62, wherein in a case that the third condition comprises that the first terminal device completes transmission of the first indication information,
the third condition comprises that the terminal device has transmitted, by using a sidelink resource, a MAC CE that carries the first indication information.

64. The first terminal device according to any one of claims 58 to 63, wherein the first indication information is capable of being carried in one or more of a PC5-S message, PC5 interface radio resource control PC5-RRC signalling, a medium access control control element MAC CE, or a physical sidelink control channel PSCCH.

65. The first terminal device according to any one of claims 58 to 64, wherein in a case that the first indication information is carried in a MAC CE, the first terminal device further comprises a second processing unit, and the second processing unit is configured to:
trigger a scheduling request SR in a case that a second condition is met.

66. The first terminal device according to claim 65, wherein the second condition comprises one or more of following:
the first terminal device currently has no SL-SCH resources available for new transmission;
the first terminal device currently has an SL-SCH resource available for new transmission, and the MAC CE is not allowed to be carried in the SL-SCH resource; or
an SL resource allocation mode 1 is configured for the first terminal device.

67. The first terminal device according to claim 65 or 66, wherein the SR is canceled based on one or more of following:
a MAC CE that has been triggered is cancelled;
a MAC CE that has been triggered and not cancelled is capable of being transmitted in a sidelink grant of the first terminal device; or
a sidelink resource allocation mode 2 is configured or reconfigured for the first terminal device.

68. The first terminal device according to any one of claims 58 to 64, wherein in a case that the first indication information is carried in a MAC CE, whether the MAC CE is capable of triggering an SR is determined by a configuration of a network device.

69. The first terminal device according to any one of claims 65 to 68, wherein at most one PUCCH used to transmit the SR is configured on each uplink bandwidth part BWP of the first terminal device; and/or
a priority of the SR is equal to a priority for carrying the MAC CE.

70. The first terminal device according to any one of claims 65 to 69, wherein the first indication information is transmitted in one or more of a multicast manner, a unicast manner, or a broadcast manner.

71. A network device, wherein the network device is a second network device and comprises:
a receiving unit, configured to receive second indication information transmitted by a second terminal device, wherein the second indication information is used for indicating a transmission delay of an NTN corresponding to a first terminal device that performs sidelink communication with the second terminal device.

72. The network device according to claim 71, wherein the network device further comprises a processing unit, and the processing unit is configured to:
generate first DRX configuration information based on the second indication information; and
transmit the first DRX configuration information to the second terminal device, wherein the first DRX configuration information is used for controlling the second terminal device to monitor a behavior of a PDCCH.

73. A terminal device, comprising a transceiver, a memory, and a processor, wherein the memory is configured to store a program, and the processor is configured to invoke the program in the memory and control the transceiver to receive or transmit a signal, to cause the terminal to execute the method according to any one of claims 1 to 34.

74. A network device, comprising a transceiver, a memory, and a processor, wherein the memory is configured to store a program, and the processor is configured to invoke the program in the memory and control the transceiver to transmit or receive a signal, to cause the network device to execute the method according to claim 35 or 36.

75. An apparatus, comprising a processor configured to invoke a program from a memory, to cause the apparatus to execute the method according to any one of claims 1 to 36.

76. A chip, comprising a processor, configured to invoke a program from a memory to cause a device installed with the chip to execute the method according to any one of claims 1 to 36.

77. A computer-readable storage medium, wherein the computer-readable storage medium stores a program, and the program causes a computer to execute the method according to any one of claims 1 to 36.

78. A computer program product, comprising a program that causes a computer to execute the method according to any one of claims 1 to 36.

79. A computer program, wherein the computer program causes a computer to execute the method according to any one of claims 1 to 36.
